# EUROPEAN PATENT SPECIFICATION

(11) **EP 4 170 473 B1**
(45) Date of publication and mention of the grant of the patent: **25.03.2026**
(21) Application number: 21826694.8
(22) Date of filing: 16.06.2021
(51) Int. Cl.: G06F 3/0481, H04M 1/725, G06F 3/04817, G06F 3/0485, G06F 3/0482, G06F 3/0488, G06F 3/04883

(54) **APPLICATION ICON DISPLAY METHOD AND APPARATUS, AND ELECTRONIC DEVICE**
VERFAHREN UND VORRICHTUNG ZUR ANZEIGE VON ANWENDUNGSSYMBOLEN UND ELEKTRONISCHE VORRICHTUNG
PROCÉDÉ ET APPAREIL D'AFFICHAGE D'ICÔNE D'APPLICATION, ET DISPOSITIF ÉLECTRONIQUE

(30) Priority: 19.06.2020 CN 202010568022
(43) Date of publication of application: 26.04.2023
(73) Proprietor: Vivo Mobile Communication Co., Ltd., Dongguan, Guangdong 523863 (CN)
(72) Inventor: SU, Yuezhi, Dongguan, Guangdong 523863 (CN)
(74) Representative: Conti, Marco
(86) International application number: PCT/CN2021/100307
(87) International publication number: WO 2021/254377

(56) References cited:
- EP-A1- 3 070 659
- WO-A1-2016/145796
- CN-A- 103 324 414
- CN-A- 104 516 673
- CN-A- 104 991 697
- CN-A- 106 445 304
- CN-A- 110 597 425
- CN-A- 111 078 069
- CN-A- 111 158 540
- CN-A- 111 831 177

## Description

### TECHNICAL FIELD

This application relates to the field of communication technologies, and in particular, to an application icon display method and apparatus.

### BACKGROUND

Generally, a user can trigger an electronic device according to a usage requirement, so as to move icons of some applications in the electronic device to one desktop of the electronic device, and display the icons of the some applications in the one desktop, so that the user can quickly perform an input on an icon of an application in the icons of the some applications. When the user needs to use other applications, the user can trigger the electronic device to switch between icons of displayed applications, so as to switch the icons of the some applications displayed in the one desktop to icons of some other applications displayed in another desktop, so that the user can perform an input on an icon of another application in the icons of the some other applications, thereby enabling the electronic device to run the another application.

However, in the above method, when switching between the icons of the displayed applications, the electronic device switches all the icons of the applications displayed in the one desktop to icons of other applications. As a result, the application icon display flexibility of the electronic device is relatively poor.

CN104516673 discloses an icon display method which is applicable to being implemented in a mobile terminal with a touch screen. Pluralities of applications are resident in the mobile terminal, each application has a relevant icon, and the pluralities of icons are arranged on the touch screen in a line and row way. The method comprises the steps of acquiring existing icon layout information; detecting the sliding operation on the touch screen, determining whether the icons are moved in a row way or a line way according to the sliding operation and the existing icon layout information, and determining an icon row or an icon line to be moved; moving either the icon row or the icon line determined by the row way or the line way, and displaying an icon layout moved in the touch screen.

CN103324414 discloses a method and a mobile terminal for adjusting icon positions. The method includes the steps: S1, responding to related operations of a user and entering an icon position adjusting desktop mode; S2, responding to the sliding operation of the user on a touch screen and identifying and determining the type, the sliding track and the sliding direction of the sliding operation; S3, determining icons with the positions needing to be adjusted and a line or row with the icons according to the sliding track after identifying the type of the sliding operation and determining the sliding track and the sliding direction of the sliding operation, and moving the determined icons with the positions needing to be adjusted and adjusting the icon positions according to the type and the sliding direction of the sliding operation.

EP3070659A1 relates to a method, a device and a terminal for displaying application messages, which belongs to the technical field of information processing. The method includes: detecting every preset time period whether there is at least one application having at least one unread message; when it is detected that one or more designated applications have at least one unread message, ranking application messages of each of the one or more designated applications according to a particular order; and displaying the ranked application messages of each of the one or more designated applications on a designated page.

### SUMMARY

Embodiments of this application aim to provide an application icon display method and apparatus, to resolve the problem that the application icon display flexibility of an electronic device is relatively low. The invention is set out in the appended set of claims.

In the embodiments of this application, in a case that a first page is displayed, an electronic device can update a second target application icon in a first target application icon on the first page according to a first input performed by a user on the first target application icon. Because the user can enable the electronic device to update the second target application icon on the first page according to the first input for the first target application icon, instead of updating all application icons on the first page, the application icon display flexibility of the electronic device can be improved.

### BRIEF DESCRIPTION OF THE DRAWINGS

FIG. 1 is a first schematic diagram of an application icon display method according to an embodiment of this application;
FIG. 2 is a first schematic diagram of an example of an interface of a mobile phone according to an embodiment of this application;
FIG. 3 is a second schematic diagram of an application icon display method according to an embodiment of this application;
FIG. 4 is a second schematic diagram of an example of an interface of a mobile phone according to an embodiment of this application;
FIG. 5 is a third schematic diagram of an example of an interface of a mobile phone according to an embodiment of this application;
FIG. 6 is a fourth schematic diagram of an example of an interface of a mobile phone according to an embodiment of this application;
FIG. 7 is a fifth schematic diagram of an example of an interface of a mobile phone according to an embodiment of this application;
FIG. 8 is a sixth schematic diagram of an example of an interface of a mobile phone according to an embodiment of this application;
FIG. 9 is a seventh schematic diagram of an example of an interface of a mobile phone according to an embodiment of this application;
FIG. 10 is an eighth schematic diagram of an example of an interface of a mobile phone according to an embodiment of this application;
FIG. 11 is a ninth schematic diagram of an example of an interface of a mobile phone according to an embodiment of this application;
FIG. 12 is a schematic structural diagram of an application icon display apparatus according to an embodiment of this application;
FIG. 13 is a schematic structural diagram of an electronic device according to an embodiment of this application; and
FIG. 14 is a schematic diagram of hardware of an electronic device according to an embodiment of this application.

### DETAILED DESCRIPTION

The following clearly and completely describes the technical solutions in the embodiments of this application with reference to the accompanying drawings in the embodiments of this application.

In the specification and the claims of this application, the terms "first", "second", and the like are intended to distinguish similar objects but do not necessarily indicate a specific order or sequence. It is to be understood that the data termed in such a way is interchangeable in proper circumstances, so that the embodiments of this application can be implemented in other sequences than the sequence illustrated or described herein. In addition, the objects distinguished by "first", "second", and the like are usually of one type, and a quantity of objects is not limited, for example, there may be one or more first objects. Moreover, "and/or" used in the specification and the claims represents at least one of the connected objects, and a character "/" in this specification generally indicates an "or" relationship between the associated objects.

The application icon display method provided in the embodiments of this application is described in detail below with reference to the accompanying drawings by using specific examples and application scenarios.

In the embodiments of this application, a user may perform an input on an electronic device in a case that the electronic device displays one page in a desktop of the electronic device, so that the electronic device can enable a "New icon display" mode and move application icons in other pages (namely, pages, except the one page, in the desktop) to a same page. In this way, the user can perform an input on an application icon in a certain row (or an application icon in a certain column) of the one page, so that the electronic device can move, based on an input direction of the input, a 1^{st} application icon or a last application icon in application icons in the certain row (or application icons in the certain column) to the same page, sequentially move each application icon of application icons, except the 1^{st} application icon or the last application icon, in the application icons in the certain row (or the application icons in the certain column) to a next position, and move a last application icon or a 1^{st} application icon in application icons in a certain row (or application icons in a certain column) of the same page to a position where the last application icon or the 1^{st} application icon in the application icons in the certain row (or the application icons in the certain column) of the one page before movement (that is, before moving the 1^{st} application icon or the last application icon to the same page), so that the application icons in the certain row (or the application icons in the certain column) are updated.

In the embodiments of this application, an electronic device can update an application icon in application icons in a certain row (or application icons in a certain column) of a first page, instead of updating all application icons on the first page. Therefore, the application icon display flexibility of the electronic device can be improved.

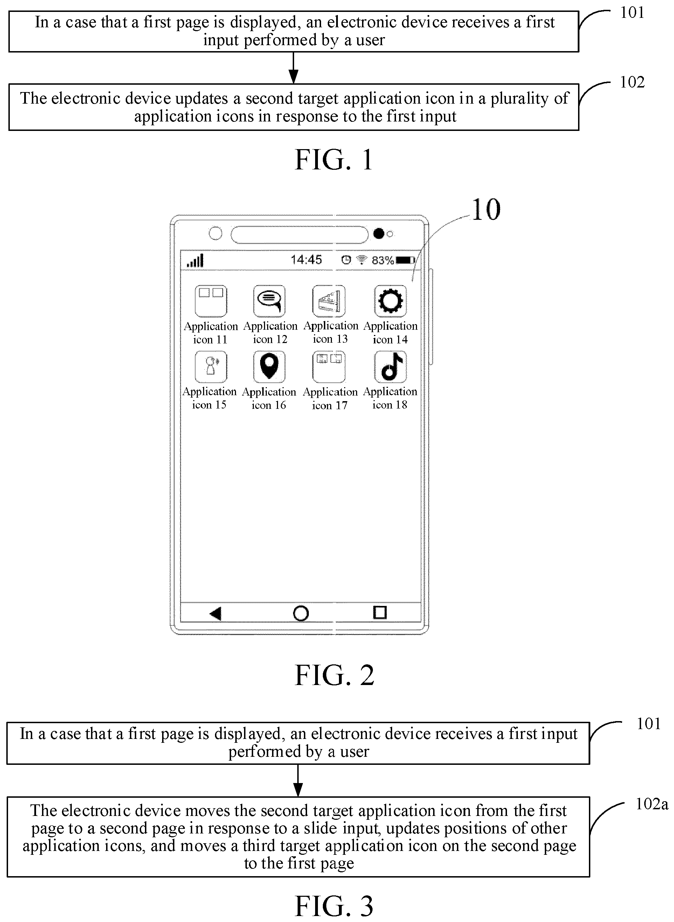

An embodiment of this application provides an application icon display method. FIG. 1 shows a flowchart of an application icon display method according to an embodiment of this application. As shown in FIG. 1, the application icon display method provided in this embodiment of this application may include the following step 101 and step 102.

Step 101: In a case that a first page is displayed, an electronic device receives a first input performed by a user.

In this embodiment of this application, the first page includes a plurality of application icons. For each application icon of the plurality of application icons, the first input is an input performed by the user on a first target application icon in the plurality of application icons. The first target application icon is at least one of an application icon in an i^{th} row or an application icon in a j^{th} column of the plurality of application icons, where both i and j are positive integers.

In this embodiment of this application, in a case that the electronic device displays a page (for example, the first page) in a desktop, the user may first perform an input (for example, a long-press input) on the first page, so that the electronic device can enable a "New icon display" mode. Then, the user may perform the first input again, so that the electronic device can update an application icon in the plurality of application icons.

Optionally, in this embodiment of this application, when the electronic device enables the "New icon display" mode, the electronic device may display the first page, and move application icons in some pages (namely, all pages, except the first page, included in the desktop) in a plurality of pages included in the desktop of the electronic device to a same page (for example, a second page in the following embodiments).

Optionally, in this embodiment of this application, the electronic device may separately move application icons in each page (namely, each of the some pages in the desktop) to an area of the same page, thereby moving the application icons in the some pages to the same page.

Optionally, in this embodiment of this application, for each of the some pages in the desktop, the electronic device may move one application icon in a page from an initial position of the one application icon to a position (namely, a position that is in an area of the same page and that corresponds to the initial position) in the area of the same page, thereby moving the one application icon to an area of the same page, separately moving application icons in each page to an area of the same page, and moving the application icons in the some pages to the same page.

For example, assuming that the desktop of the electronic device includes a plurality of pages (such as a page 1, a page 2, and a page 3), the page 1 includes an application icon 1, an application icon 2, and an application icon 3, the page 2 includes an application icon 4, an application icon 5, and an application icon 6, and the page 3 includes an application icon 7, an application icon 8, and an application icon 9, when the electronic device enables the "New icon display" mode, the electronic device can move the application icons in the page 2 and the page 3 to a same page. In other words, the application icon 4, the application icon 5, and the application icon 6 are moved to one area of the same page. For example, the application icon 4 is moved from an initial position that is in the page 2 and that is of the application icon 4 (for example, a position that is in a 1^{st} row and a 1^{st} column of the page 2 and that is used to display the application icon 4) to a corresponding position in the one area of the same page (for example, a position that is in the 1^{st} row and the 1^{st} column of the one area and that is used to display an application icon); the application icon 5 is moved from an initial position that is in the page 2 and that is of the application icon 5 (for example, a position that is in the 1^{st} row and a 2^{nd} column of the page 2 and that is used to display the application icon 5) to a corresponding position in the one area of the same page (for example, a position that is in the 1^{st} row and the 2^{nd} column of the one area and that is used to display an application icon); and the application icon 6 is moved from an initial position that is in the page 2 and that is of the application icon 6 (for example, a position that is in a 2^{nd} row and the 1^{st} column of the page 2 and that is used to display the application icon 6) to a corresponding position in the one area of the same page (for example, a position that is in the 2^{nd} row and the 1^{st} column of the one area and that is used to display an application icon). In addition, the application icon 7, the application icon 8, and the application icon 9 are moved to another area of the same page. For example, the application icon 7 is moved from an initial position that is in the page 3 and that is of the application icon 7 (for example, a position that is in a 3^{rd} row and a 1^{st} column of the page 3 and that is used to display the application icon 7) to a corresponding position in the another area of the same page (for example, a position that is in the 3^{rd} row and the 1^{st} column of the another area and that is used to display an application icon); the application icon 8 is moved from an initial position that is in the page 3 and that is of the application icon 8 (for example, a position that is in the 3^{rd} row and a 2^{nd} column of the page 3 and that is used to display the application icon 8) to a corresponding position in the another area of the same page (for example, a position that is in the 3^{rd} row and the 2^{nd} column of the another area and that is used to display an application icon); and the application icon 9 is moved from an initial position that is in the page 3 and that is of the application icon 9 (for example, a position that is in a 4^{th} row and a 3^{rd} column of the page 3 and that is used to display the application icon 9) to a corresponding position in the another area of the same page (for example, a position that is in the 4^{th} row and the 3^{rd} column of the another area and that is used to display an application icon). In addition, the page 1 is displayed.

Optionally, in this embodiment of this application, for each of a plurality of areas of the same page, an application icon in a 1^{st} row of one area and an application icon in a 1^{st} row of another area are on a same straight line; an application icon in a 2^{nd} row of the one area and an application icon in a 2^{nd} row of the another area are on a same straight line; and other cases can be deduced by analogy until an application icon in a last row of the one area and an application icon in a last row of the another area are on a same straight line.

It should be noted that, the above "application icons are on a same straight line" may be understood as follows: A center point of an application icon and a center point of another application icon are on a same straight line.

Optionally, in this embodiment of this application, the plurality of application icons may include any one of an application program icon and an application program name.

Optionally, in this embodiment of this application, the first input may specifically be a slide input performed by the user on the application icon in the i^{th} row and/or the application icon in the j^{th} column.

Optionally, in this embodiment of this application, in a case that the first input is a slide input performed by the user on the application icon in the i^{th} row and the application icon in the j^{th} column, the first input may include at least one first sub-input. Some first sub-inputs of the at least one first sub-input are slide inputs performed by the user on the application icon in the i^{th} row; and the other first sub-inputs may be slide inputs performed by the user on the application icon in the j^{th} column.

For example, the following uses an example in which the electronic device is a mobile phone for description. As shown in FIG. 2, the mobile phone displays a first page 10. The first page includes a plurality of application icons (such as an application icon 11, an application icon 12, an application icon 13, an application icon 14, an application icon 15, an application icon 16, an application icon 17, and an application icon 18). In this case, a user can perform a first input on a first target application icon, for example, application icons in a 1^{st} row (namely, the application icon 11, the application icon 12, the application icon 13, and the application icon 14).

Step 102: The electronic device updates a second target application icon in a plurality of application icons in response to the first input.

In this embodiment of this application, the second target application icon is an application icon in the first target application icon or is an application icon that is on the first page and that is associated with the first input.

In this embodiment of this application, different input features may be associated with different application icons.

Optionally, in this embodiment of this application, in a case that the second target application icon is the application icon in the first target application icon, the electronic device may move the second target application icon to another page (for example, the second page in the following embodiments), and move an application icon in the another page to a position of the first target application icon (for example, the i^{th} row or the j^{th} column), thereby updating the second target application icon in the plurality of application icons.

Optionally, in this embodiment of this application, the second target application icon may specifically be an application icon that is on the first page and that is associated with an input feature of the first input. The input feature of the first input may include an input object of the first input and an input track of the first input (or an input direction of the first input).

Optionally, in this embodiment of this application, in a case that the second target application icon is the application icon that is on the first page and that is associated with the input feature of the first input, the electronic device may move the second target application icon on the first page to a position on the first page (for example, a preset position in the following embodiments), thereby updating the second target application icon in the plurality of application icons.

Optionally, in this embodiment of this application, in a case that the second target application icon is the application icon that is on the first page and that is associated with the input feature of the first input, the electronic device may determine an application icon in another page (for example, the second page in the following embodiments) as the second target application icon, and move the second target application icon to a position on the first page (for example, the preset position in the following embodiments), thereby updating the second target application icon in the plurality of application icons.

Optionally, in this embodiment of this application, the second target application icon is any one of the 1^{st} application icon in the i^{th} row, the last application icon in the i^{th} row, the 1^{st} application icon in the j^{th} column, and the last application icon in the j^{th} column.

It should be noted that, the "1^{st} application icon in the i^{th} row" may be understood as a 1^{st} application icon in a first preset direction of the i^{th} row of the first page; and the "last application icon in the i^{th} row" may be understood as a last application icon in the first preset direction of the i^{th} row of the first page in a case that the electronic device is in a portrait mode. The first preset direction may specifically be a direction from a first edge line (for example, a left edge line of a display screen of the electronic device) to a second edge line (for example, a right edge line of the display screen) of the display screen. The "1^{st} application icon in the j^{th} column" may be understood as a 1^{st} application icon in a second preset direction of the j^{th} column of the first page; and the "last application icon in the j^{th} column" may be understood as a last application icon in the second preset direction of the j^{th} column of the first page in a case that the electronic device is in the portrait mode. The second preset direction may specifically be a direction from a third edge line (for example, an upper edge line of the display screen) to a fourth edge line (for example, a lower edge line of the display screen) of the display screen of the electronic device.

It may be understood that the first edge line is parallel to the second edge line, the third edge line is parallel to the fourth edge line, and the first edge line is perpendicular to the third edge line.

Optionally, in a possible implementation of this embodiment of this application, the first input is a slide input performed by the user on the first target application icon, the first target application icon is the application icon in the i^{th} row or the application icon in the j^{th} column, and the second target application icon is an application icon in the first target application icon. Specifically, with reference to FIG. 1, as shown in FIG. 3, step 102 may be implemented by using the following step 102a.

Step 102a: The electronic device moves the second target application icon from the first page to a second page in response to a slide input, updates positions of other application icons, and moves a third target application icon on the second page to the first page.

In this embodiment of this application, the other application icons are application icons, except the second target application icon, in the first target application icon; and in a case that the first target application icon is the application icon in the i^{th} row, the third target application icon is an application icon in an i^{th} row of the second page; or in a case that the first target application icon is the application icon in the j^{th} column, the third target application icon is an application icon in a j^{th} column of the second page.

Optionally, in this embodiment of this application, the other application icons may be any one of the following: application icons, except the 1^{st} application icon, in the application icons in the i^{th} row; application icons, except the last application icon, in the application icons in the i^{th} row; application icons, except the 1^{st} application icon, in the application icons in the j^{th} column; and application icons, except the last application icon, in the application icons in the j^{th} column.

Optionally, in this embodiment of this application, the electronic device may move the third target application icon on the second page to the application icon in the i^{th} row of the first page, and may alternatively move the third target application icon on the second page to the application icon in the j^{th} column of the first page, thereby moving the third target application icon to the first page.

In this embodiment of this application, during a use process of the electronic device, if the user needs to switch one application icon on the first page for another application icon, the user may perform a slide input on the first target application icon; and if the one application icon is a 1^{st} application icon or a last application icon in the first target application icon, the electronic device may directly move the one application icon to the second page, and move an application icon on the second page to the first page; or if the one application icon is neither the 1^{st} application icon nor the last application icon in the first target application icon, the user may continue performing a slide input on the first target application icon to: move the one application icon to the second page and move another application icon on the second page to the first page.

In this embodiment of this application, the user can update some application icons on the first page by performing a slide input on the some application icons to: move an application icon in the some application icons to the second page, and move another application icon on the second page to the first page, instead of updating all application icons on the first page. Therefore, the application icon display flexibility of the electronic device can be improved.

Optionally, in this embodiment of this application, the foregoing step 102a may be specifically implemented by using the following step 102a1.

Step 102a1: The electronic device moves the second target application icon to a first position in response to the slide input based on a slide direction of the slide input, sequentially moves each application icon of the other application icons to a next position in the slide direction, and moves the third target application icon to a second position.

In this embodiment of this application, the first position is any one of the following: a 1^{st} position in the i^{th} row of the second page, a last position in the i^{th} row of the second page, a 1^{st} position in the j^{th} column of the second page, and a last position in the j^{th} column of the second page; and the second position is any one of the following: a 1^{st} position in the i^{th} row of the first page, a last position in the i^{th} row of the first page, a 1^{st} position in the j^{th} column of the first page, and a last position in the j^{th} column of the first page.

Optionally, in this embodiment of this application, the slide direction of the slide input may be any one of a first direction, a second direction, a third direction, and a fourth direction.

Optionally, in this embodiment of this application, the second direction is opposite the first direction, and the first direction may be the same as the first preset direction.

Optionally, in this embodiment of this application, the third direction is opposite the fourth direction, and the third direction may be the same as the second preset direction.

In this embodiment of this application, one position (for example, the first position, the second position, or the next position) is used to display one application icon. For each application icon of the other application icons, the electronic device may move one application icon to a before-movement position of a next application icon (namely, an application icon that is on the first page and that is next to the one application icon) in the slide direction, thereby moving each application icon to a next position.

It should be noted that, the "application icon next to the one application icon" may be understood as an application icon adjacent to the one application icon in the slide direction.

Optionally, in this embodiment of this application, the first target application icon is the application icon in the i^{th} row, the slide direction is a first direction or a second direction, and the second direction is opposite the first direction.

Optionally, in a possible implementation of this embodiment of this application, if the slide direction is the first direction, the second target application icon is a last application icon in the i^{th} row, the first position is the 1^{st} position in the i^{th} row of the second page, the third target application icon is a last application icon in the i^{th} row of the second page, and the second position is the 1^{st} position in the i^{th} row of the first page.

Optionally, in this embodiment of this application, in a case that the second target application icon is the last application icon in the i^{th} row, the other application icons may specifically be application icons, except the last application icon, in the application icons in the i^{th} row.

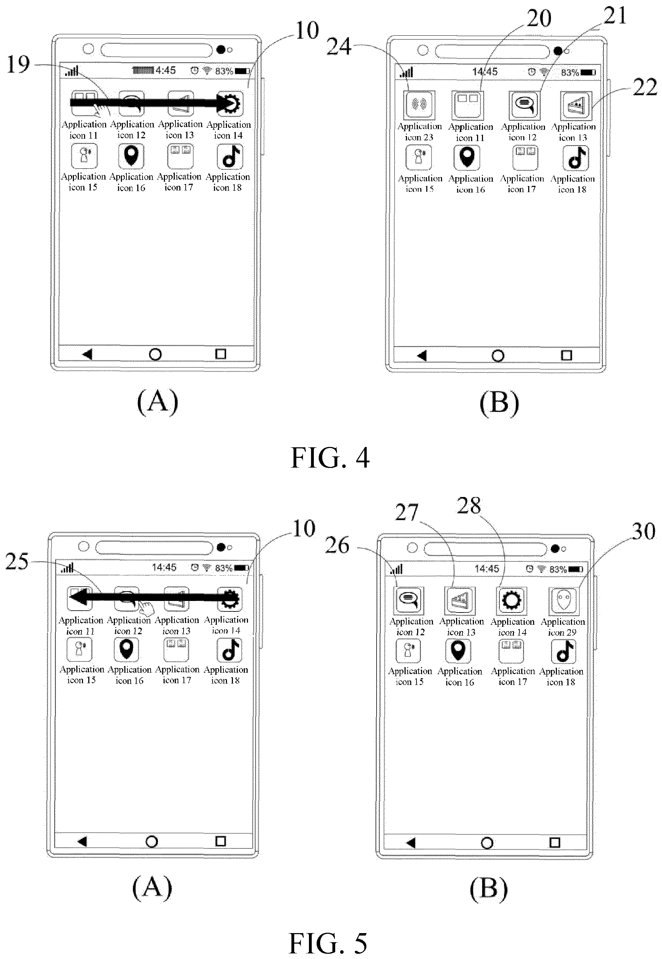

For example, with reference to FIG. 2, as shown in FIG. 4(A), the user may perform the slide input on the application icons in the 1^{st} row (namely, the application icon 11, the application icon 12, the application icon 13, and the application icon 14), where the slide direction of the slide input is a first direction 19; and as shown in FIG. 4(B), after the user performs the slide input, the mobile phone may move the second target application icon (for example, a last application icon in the 1^{st} row (namely, the application icon 14)) to the first position based on the first direction 19, and move, in the first direction 19, the application icon 11 to a next position (for example, a position 20), the application icon 12 to a next position (for example, a position 21), the application icon 13 to a next position (for example, a position 22), and the third target application icon (for example, an application icon 23) to the second position (for example, a position 24).

Optionally, in another possible implementation of this embodiment of this application, if the slide direction is the second direction, the second target application icon is a 1^{st} application icon in the i^{th} row, the first position is the last position in the i^{th} row of the second page, the third target application icon is a 1^{st} application icon in the i^{th} row of the second page, and the second position is the last position in the i^{th} row of the first page.

Optionally, in this embodiment of this application, in a case that the second target application icon is the 1^{st} application icon in the i^{th} row, the other application icons may specifically be application icons, except the 1^{st} application icon, in the application icons in the i^{th} row.

For example, with reference to FIG. 2, as shown in FIG. 5(A), the user may perform the slide input on the application icons in the 1^{st} row (namely, the application icon 11, the application icon 12, the application icon 13, and the application icon 14), where the slide direction of the slide input is a second direction 25; and as shown in FIG. 5(B), after the user performs the slide input, the mobile phone may move the second target application icon (for example, a 1^{st} application icon in the 1^{st} row (namely, the application icon 11)) to the first position based on the second direction 25, and move, in the second direction 25, the application icon 12 to a next position (for example, a position 26), the application icon 13 to a next position (for example, a position 27), the application icon 14 to a next position (for example, a position 28), and the third target application icon (for example, an application icon 29) to the second position (for example, a position 30).

Optionally, in this embodiment of this application, the first target application icon is the application icon in the j^{th} column, the slide direction is a third direction or a fourth direction, and the fourth direction is opposite the third direction.

Optionally, in a possible implementation of this embodiment of this application, if the slide direction is the third direction, the second target application icon is a last application icon in the j^{th} column, the first position is the 1^{st} position in the j^{th} column of the second page, the third target application icon is a last application icon in the j^{th} column of the second page, and the second position is the 1^{st} position in the j^{th} column of the first page.

Optionally, in this embodiment of this application, in a case that the second target application icon is the last application icon in the j^{th} column, the other application icons may specifically be application icons, except the last application icon, in the application icons in the j^{th} column.

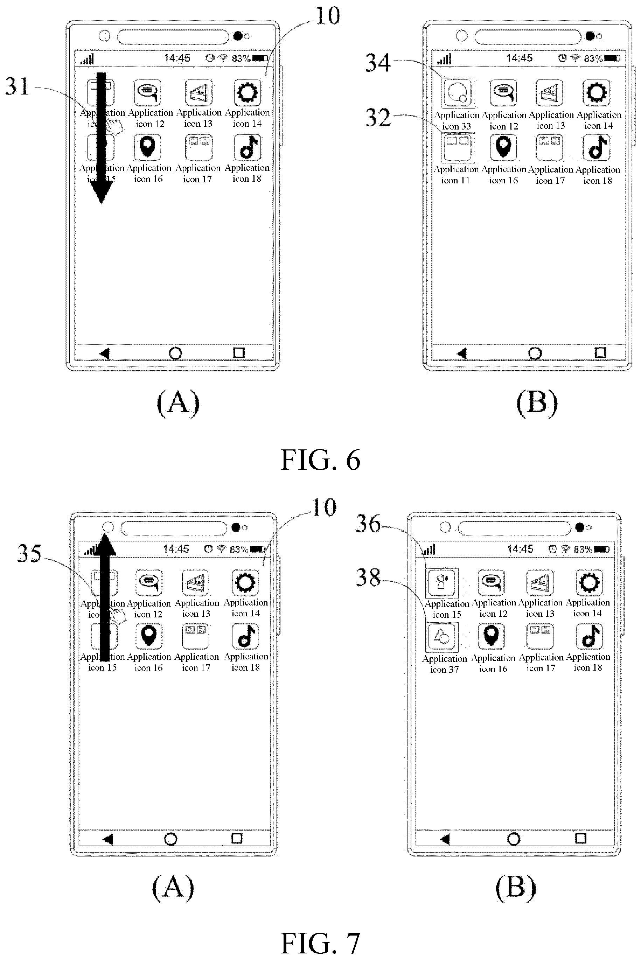

For example, with reference to FIG. 2, as shown in FIG. 6(A), the user may perform the slide input on the application icons in the 1^{st} column (namely, the application icon 11 and the application icon 15), where the slide direction of the slide input is a third direction 31; and as shown in FIG. 6(B), after the user performs the slide input, the mobile phone may move the second target application icon (for example, a last application icon in the 1^{st} column (namely, the application icon 15)) to the first position based on the third direction 31, and move, in the third direction 31, the application icon 11 to a next position (for example, a position 32) and the third target application icon (for example, an application icon 33) to the second position (for example, a position 34).

Optionally, in another possible implementation of this embodiment of this application, if the slide direction is the fourth direction, the second target application icon is a 1^{st} application icon in the j^{th} column, the first position is the last position in the j^{th} column of the second page, the third target application icon is a 1^{st} application icon in the j^{th} column of the second page, and the second position is the last position in the j^{th} column of the first page.

Optionally, in this embodiment of this application, the first target application icon is the application icon in the j^{th} column, the slide direction is a third direction or a fourth direction, and the fourth direction is opposite the third direction.

Optionally, in this embodiment of this application, in a case that the second target application icon is the 1^{st} application icon in the j^{th} column, the other application icons may specifically be application icons, except the 1^{st} application icon, in the application icons in the j^{th} column.

For example, with reference to FIG. 2, as shown in FIG. 7(A), the user may perform the slide input on the application icons in the 1^{st} column (namely, the application icon 11 and the application icon 15), where the slide direction of the slide input is a fourth direction 35; and as shown in FIG. 7(B), after the user performs the slide input, the mobile phone may move the second target application icon (for example, a 1^{st} application icon in the 1^{st} column (namely, the application icon 11)) to the first position based on the fourth direction 35, and move, in the fourth direction 35, the application icon 15 to a next position (for example, a position 36) and the third target application icon (for example, an application icon 37) to the second position (for example, a position 38).

Optionally, in this embodiment of this application, after the electronic device moves the third target application icon to the second position, the electronic device may sequentially move each application icon of the application icons in the i^{th} row of the second page to the next position in the slide direction.

In this embodiment of this application, the electronic device can move the second target application icon to the second page based on the slide direction of the slide input performed by the user, separately move other application icons to the next position in the slide direction, and move the third target application icon to the second position, so that the user can update the second target application icon as required, to improve use experience of the user.

According to the application icon display method provided in this embodiment of this application, in a case that a first page is displayed, an electronic device can update a second target application icon in a first target application icon on the first page according to a first input performed by a user on the first target application icon. Because the user can enable the electronic device to update the second target application icon on the first page according to the first input for the first target application icon, instead of updating all application icons on the first page, the application icon display flexibility of the electronic device can be improved.

In this embodiment of this application, user's sense of operation can be improved by using a novel icon display and interaction manner, so that icon display and interaction manners are diversified to improve use experience of the user.

Optionally, in this embodiment of this application, before "receiving a first input performed by a user" in step 101, the application icon display method provided in this embodiment of this application may further include the following step 201 and step 202. In addition, step 102 may be specifically implemented by using the following step 102b (or step 102c).

Step 201: In a case that a first page is displayed, an electronic device receives a second input performed by a user.

In this embodiment of this application, the second input is an input performed by the user on a fourth target application icon; and the fourth target application icon is an application icon in an i^{th} row or an application icon in a j^{th} column of the first page.

Optionally, in this embodiment of this application, in a case that the first page is displayed, the user may perform an input (for example, an upslide input) on the electronic device, so that the electronic device can control a plurality of application icons on the first page to be in an editable state. In this way, the user can perform the second input on the fourth target application icon on the first page.

Optionally, in this embodiment of this application, the fourth input may specifically be a long-press input performed by the user on the fourth target application icon.

Step 202: The electronic device controls, in response to the second input, a fourth target application icon to be in a locked state.

It should be noted that, the "one application icon in a locked state" may be understood as follows: When the user performs an input on a position (for example, the i^{th} row or the j^{th} column) that is on the first page and that is of the one application icon, the electronic device does not update a state of the one application icon.

Optionally, in this embodiment of this application, in a case that the electronic device controls the fourth target application icon to be in the locked state, the electronic device may use a first marking manner to mark the fourth target application icon.

Optionally, in this embodiment of this application, the first marking manner may include any one of the following: an animation-based marking manner, a dashed box-based marking manner, a highlight-based marking manner, a color-based marking manner, a gray-based marking manner, a preset transparency-based marking manner, a flicker-based marking manner, and the like.

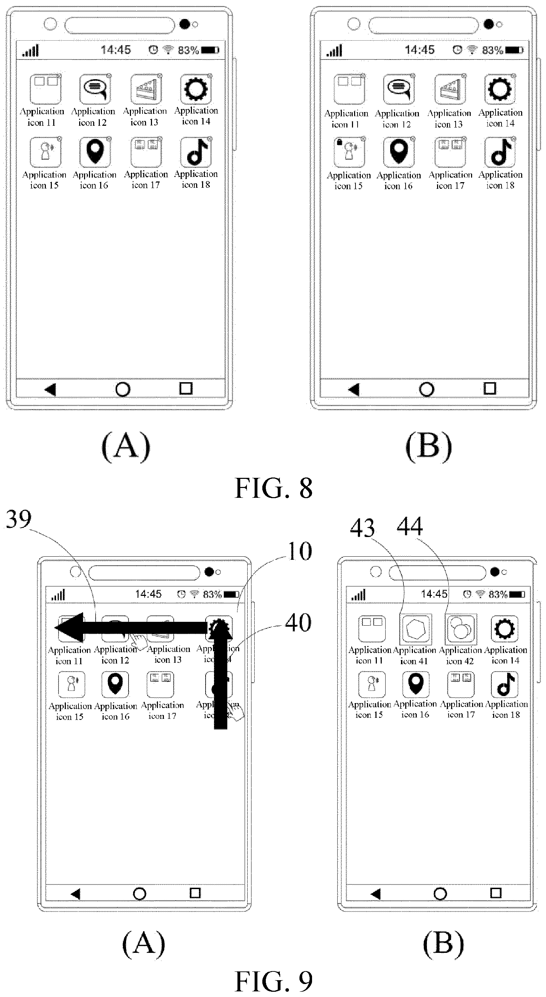

For example, with reference to FIG. 2, as shown in FIG. 8(A), in a case that the mobile phone displays the first page 10, the user may perform an input on the mobile phone, so that the application icon 11, the application icon 12, the application icon 13, the application icon 14, the application icon 15, the application icon 16, the application icon 17, and the application icon 18 are in the editable state. In this way, the user can perform the second input on the fourth target application icon (for example, the application icon 15). As shown in FIG. 8(B), after the user performs the second input on the application icon 15, the mobile phone may control the application icon 15 to be in the locked state, and use a first marking manner (for example, the animation-based marking manner) to mark the application icon 15.

Step 102b: The electronic device updates application icons, except the fourth target application icon, in the application icons in the i^{th} row of the first page.

Optionally, in this embodiment of this application, in a case that the fourth target application icon is in the locked state, the second target application icon is a 1^{st} application icon (or a last application icon), different from the fourth target application icon, in the application icons in the i^{th} row; and the other application icons are application icons, except the fourth target application icon, in the application icons in the i^{th} row and application icons, except for the 1^{st} application icon (or the last application icon), in the i^{th} row.

It may be understood that in response to the slide input, the electronic device does not move the fourth target application icon, but moves the 1^{st} application icon, different from the fourth target application icon, in the application icons in the i^{th} row to the first position, and moves each application icon (namely, the application icons, except the fourth target application icon, in the application icons in the i^{th} row) to the next position in the slide direction.

In this embodiment of this application, the user may perform the input on the electronic device in a case that the electronic device displays the first page, so that the plurality of application icons on the first page are in the editable state. In this way, the user can perform the second input on the certain application icon that is on the plurality of application icons and that is frequently used by the user, so that the electronic device can control the certain application icon to be in the locked state.

In this embodiment of this application, because the electronic device can control, according to user's input, the certain application icon on the first page to be in the locked state, so that the electronic device skips updating the certain application icon when updating an application icon in the i^{th} row of the first page, that is, the first page can include the certain application icon all the time. In this way, the user can quickly perform an input on the certain application icon, so that the electronic device can quickly enable a certain application corresponding to the certain application icon. Therefore, use experience of the user can be improved.

Step 102c: The electronic device updates application icons, except the fourth target application icon, in the application icons in the j^{th} column of the first page.

In this embodiment of this application, because the electronic device can control, according to user's input, the certain application icon on the first page to be in the locked state, so that the electronic device skips updating the certain application icon when updating an application icon in the j^{th} column of the first page, that is, the first page can include the certain application icon all the time. In this way, the user can quickly perform an input on the certain application icon, so that the electronic device can quickly enable a certain application corresponding to the certain application icon. Therefore, use experience of the user can be improved.

Optionally, in another possible implementation of this embodiment of this application, the second target application icon is an application icon that is on the first page and that is associated with the first input. Specifically, step 102 may be implemented by using the following step 102d.

Step 102d: If an input feature of the first input matches a preset input feature, the electronic device determines, in response to the first input, an application icon that is on the first page and that is associated with the preset input feature as the second target application icon, moves the second target application icon from a third position on the first page to a preset position on the first page, and moves an application icon at the preset position to the third position.

Optionally, in this embodiment of this application, the preset input feature may include a target preset input object and a target preset input track (or a target preset slide direction).

Optionally, in this embodiment of this application, the electronic device may store a plurality of association relationships in the electronic device in advance. Each association relationship in the plurality of association relationships is an association relationship between a preset input feature and at least one application icon. Therefore, in response to the first input, the electronic device may first select a target association relationship (the target association relationship includes the preset input feature) corresponding to the input feature of the first input from the plurality of association relationships based on the input feature of the first input, and then determine at least one application icon that is the target association relationship and that is associated with the preset input feature as the second target application icon.

Optionally, in this embodiment of this application, the third position may specifically be a position that is on the first page and where the second target application icon is disposed before the electronic device moves the second target application icon.

Optionally, in this embodiment of this application, the preset position may specifically be a position where any application icon in the application icons in the 1^{st} row (or the 1^{st} column) of the first page is disposed.

Optionally, in this embodiment of this application, after the electronic device moves the second target application icon from the third position on the first page to the preset position on the first page, and moves the application icon at the preset position to the third position, the electronic device can enable (that is, enable foreground running of) an application corresponding to the second target application icon, so that the user can use the application.

In this embodiment of this application, during a use process of the electronic device, if the user needs to use an application corresponding to a certain application icon on the first page, the user does not need to search the plurality of application icons on the first page for the certain application icon, but can directly perform an input on some application icons (for example, the first target application icon) on the first page. Therefore, in a case that the input feature of the input matches the preset input feature, the electronic device can move the certain application icon to the preset position, and enable the application corresponding to the certain application icon, so that the user can use the application.

In this embodiment of this application, because the electronic device can directly move, based on the input feature of the input performed by the user, a certain application icon associated with the preset input feature to the preset position in a case that the input feature matches the preset input feature, so that the user can perform the input on the certain application icon quickly. Therefore, use experience of the user can be improved.

Optionally, in still another possible implementation of this embodiment of this application, the second target application icon is an application icon that is on the first page and that is associated with the first input. Specifically, step 102 may be implemented by using the following step 102e.

Step 102e: If the input feature of the first input matches the preset input feature, the electronic device determines, in response to the first input, an application icon that is on the second page and that is associated with the preset input feature as the second target application icon, moves the second target application icon from a fourth position on the second page to a preset position on the first page, and moves an application icon at the preset position to the fourth position.

Optionally, in this embodiment of this application, the fourth position may specifically be a position that is on the second page and where the second target application icon is disposed before the electronic device moves the second target application icon.

For example, with reference to FIG. 2, as shown in FIG. 9(A), the user may perform the first input on the first target application icon (for example, the application icon 11, the application icon 12, the application icon 13, the application icon 14, and the application icon 16), that is, a slide input whose slide direction is a direction 39 is performed on the application icon 11, the application icon 12, the application icon 13, and the application icon 14, and a slide input whose slide direction is a direction 40 is performed on the application icon 14 and the application icon 18. As shown in FIG. 9(B), after the user performs the first input on the application icon 11, the application icon 12, the application icon 13, the application icon 14, and the application icon 18, in a case that the input feature (for example, an input object and a slide direction) of the first input matches the preset input feature, the mobile phone may determine, in response to the first input, that an application icon that is on the second page and that is associated with the preset input feature as the second target application icon (for example, an application icon 41 and an application icon 42), and move the application icon 41 from the fourth position on the second page to the preset position on the first page (for example, a position 43), the application icon 42 from the fourth position on the second page to the preset position (for example, a position 44) on the first page, an application icon at the preset position to the fourth position.

In this embodiment of this application, during a use process of the electronic device, if the user needs to use an application corresponding to a certain application icon on the second page, the user does not need to perform a plurality of inputs on the application icons on the first page to enable the electronic device to update the application icons on the first page and to display the certain application icon on the first page, but can directly perform an input on some application icons (for example, the first target application icon) on the first page. Therefore, in a case that the input feature of the input matches the preset input feature, the electronic device can move the certain application icon on the second page to the preset position on the first page, and enable the application corresponding to the certain application icon, so that the user can use the application.

In this embodiment of this application, because the electronic device can directly move, based on the input feature of the input performed by the user, a certain application icon that is on the second page and that is associated with the preset input feature to the preset position on the first page in a case that the input feature matches the preset input feature, so that the user can perform the input on the certain application icon quickly. Therefore, use experience of the user can be improved.

Optionally, in this embodiment of this application, before "receiving a first input performed by a user" in step 101, the application icon display method provided in this embodiment of this application may further include the following step 301 to step 304.

Step 301: In a case that a first page is displayed, an electronic device receives a fourth input performed by a user.

In this embodiment of this application, the fourth input is an input performed by the user on a sixth target application icon on the first page.

Optionally, in this embodiment of this application, in a case that the first page is displayed, the user may perform an input (for example, an upslide input) on the electronic device, so that the electronic device can control a plurality of application icons on the first page to be in an editable state. In this way, the user can perform the fourth input on the sixth target application icons in the at least one icon.

Optionally, in this embodiment of this application, the plurality of application icons on the first page are in the editable state, and the user can perform an input on the application icon in the i^{th} row or the application icon in the j^{th} column of the first page, so that the electronic device can update the application icon in the i^{th} row or the application icon in the j^{th} column of the first page to display the sixth target application icon on the first page. Therefore, the user can perform the fourth input on the sixth target application icon.

Optionally, in this embodiment of this application, the fourth input may specifically be a click input performed by the user on the sixth target application icon.

Step 302: The electronic device selects and marks the sixth target application icon from the first page in response to the fourth input.

Optionally, in this embodiment of this application, the electronic device may select the sixth target application icon from the first page, and mark the sixth target application icon in a second marking manner.

Optionally, in this embodiment of this application, the second marking manner may include any one of the following: an animation-based marking manner, a dashed box-based marking manner, a highlight-based marking manner, a color-based marking manner, a gray-based marking manner, a preset transparency-based marking manner, a flicker-based marking manner, and the like.

Step 303: The electronic device receives a fifth input performed by the user.

In this embodiment of this application, the fifth input is an input performed by the user on a seventh target application icon on the first page, the seventh target application icon is at least one of an application icon in a g^{th} row or an application icon in an h^{th} column, and both g and h are positive integers.

Optionally, in this embodiment of this application, the fifth input may specifically be a slide input performed by the user on the application icon in the g^{th} row or the application icon in the h^{th} column.

Step 304: The electronic device establishes an association relationship between an input feature of the fifth input and a seventh target application icon in response to the fifth input.

Optionally, in this embodiment of this application, the input feature of the fifth input includes an input object of the fifth input and an input track of the fifth input (or a slide direction of the fifth input).

Optionally, in this embodiment of this application, the electronic device may obtain an association relationship by associating and storing the input feature of the fifth input and the seventh target application icon, thereby establishing the association relationship between the input feature of the fifth input and the seventh target application icon.

Optionally, in this embodiment of this application, after the electronic device establishes the association relationship between the input feature of the fifth input and the seventh target application icon, the user may perform an input on the electronic device again in a case that the electronic device displays the first page, so that the electronic device can perform step 301 to step 304 again, thereby storing a plurality of association relationships into the electronic device.

In this embodiment of this application, the user may perform the input on the electronic device in a case that the electronic device displays the first page, so that the plurality of application icons on the first page are in the editable state. In this way, the user can perform the fourth input on the certain application icon that is on the plurality of application icons and that is frequently used by the user, so that the electronic device can select and mark the certain application icon. Then, the user can perform the fifth input on some application icons on the first page, so that the electronic device can establish the association relationship between the input feature of the fifth input and the certain application icon. Therefore, when needing to use the certain application icon, the user can directly perform an input on the some application icons on the first page, so that the electronic device can move the certain application icon to a preset position on the first page quickly in a case that an input feature of the input matches the input feature of the fifth input.

In this embodiment of this application, the electronic device can establish the association relationship between the input feature of the fifth input performed by the user and the certain application icon based on the input feature, to enable the user to directly perform an input on the first page, so that the electronic device can move the certain application icon to a preset position on the first page quickly in a case that an input feature of the input matches the input feature of the fifth input.

In the embodiment covered by the claims, before "receiving a first input performed by a user" in step 101, the application icon display method provided in this embodiment of this application includes the following step 401 to step 403.

Step 401: In a case that the first page is displayed, the electronic device displays a first control at a fifth position on the first page if an application corresponding to a fifth target application icon on a second page receives a target message.

In this embodiment of this application, the fifth target application icon is an application icon in a q^{th} row or an application icon in a p^{th} column of the second page, the fifth position is a position that is on the first page and that corresponds to the fifth target application icon, the first control is configured to display the fifth target application icon on the first page, and both q and p are positive integers.

Optionally, in this embodiment of this application, the target message may specifically be a notification message in the application corresponding to the fifth target application icon.

Optionally, in this embodiment of this application, the fifth position may specifically be a position that is of the application icon in the q^{th} row of the first page and that is close to a first edge line or close to the second edge line; or the fifth position may specifically be a position that is of the application icon in the p^{th} column of the first page and that is close to a third edge line or close to the fourth edge line.

Optionally, in this embodiment of this application, in a case that a first distance is greater than a second distance, the electronic device may display the first control at the position (namely, the fifth position) that is on the first page and that is close to the first edge line; or in a case that the first distance is less than or equal to the second distance, the electronic device may display the first control at the position (namely, the fifth position) that is on the first page and that is close to the second edge line. The first distance is a distance between a fifth target application icon on the second page and the first edge line (or the third edge line); and the second distance is a distance between the fifth target application icon and the second edge line (or the fourth edge line).

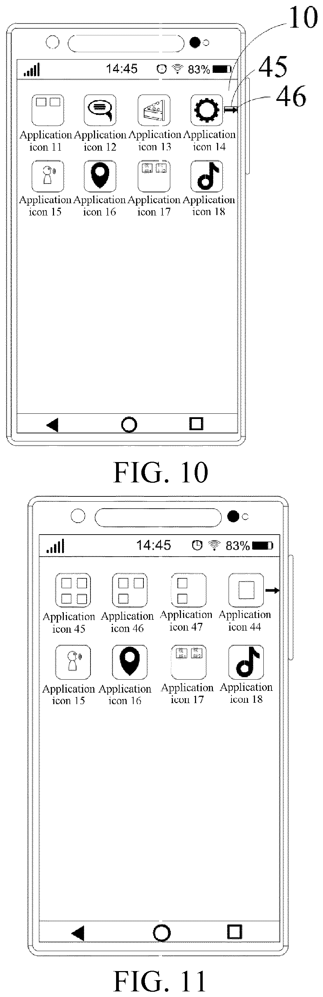

For example, with reference to FIG. 2, as shown in FIG. 10, if an application corresponding to the fifth target application icon (for example, an application icon 44, where the application icon 44 is in the 1^{st} row of the second page) on the second page receives the target message, the mobile phone displays the first control 46 at the fifth position (for example, a position 45) on the first page, so that the user can perform a third input on the first control 46.

Optionally, in this embodiment of this application, in a case that the electronic device displays the first control at the fifth position on the first page, the user can perform an input (for example, a shake input) on the electronic device, so that the electronic device can cancel displaying of the first control.

Step 402: The electronic device receives a third input performed by the user on the first control.

Optionally, in this embodiment of this application, the third input may specifically be a click input performed by the user on the first control.

Optionally, in this embodiment of this application, in a case that the fifth target application icon is a plurality of application icons, the third input may include at least one second sub-input. Each second sub-input may be a click input performed by the user on the first control.

Step 403: The electronic device updates the application icon in the q^{th} row or the application icon in the p^{th} column of the first page in response to third input, thereby displaying the fifth target application icon on the first page.

Optionally, in this embodiment of this application, in a case that the fifth position is a position close to the first edge line, the electronic device may move the application icon in the q^{th} row of the first page in a direction away from the fifth position, that is, the electronic device may move an eighth application icon (namely, a 1^{st} application icon in the q^{th} row of the first page) to a sixth position (namely, a position where a last application icon in a q^{th} row of the second page is disposed before the electronic device moves the eighth application icon), sequentially move each application icon (each application icon of application icons, except the 1^{st} application icon in the q^{th} row, in the application icons in the q^{th} row) of the application icons in the q^{th} row to a next position in the direction away from the fifth position, and move a ninth target application icon (namely, the last application icon in the q^{th} row of the second page) to a seventh position (namely, a position where the last application icon in the q^{th} row is disposed before the electronic device moves the eighth application icon). In addition, in a case that the last application icon in the q^{th} row of the second page is not the fifth target application icon, the electronic device may continue moving the application icon in the q^{th} row of the first page in the direction away from the fifth position until the electronic device displays the fifth target application icon on the first page.

Optionally, in this embodiment of this application, in a case that the fifth position is a position close to the third edge line, the electronic device may move the application icon in the p^{th} column of the first page in a direction away from the fifth position, that is, the electronic device may move an eighth application icon (namely, a 1^{st} application icon in the p^{th} column of the first page) to a sixth position (namely, a position where a last application icon in a p^{th} column of the second page is disposed before the electronic device moves the eighth application icon), sequentially move each application icon (each application icon of application icons, except the 1^{st} application icon in the p^{th} column, in the application icons in the p^{th} column) of the application icons in the p^{th} column to a next position in the direction away from the fifth position, and move a ninth target application icon (namely, the last application icon in the p^{th} column of the second page) to a seventh position (namely, a position where the last application icon in the p^{th} column is disposed before the electronic device moves the eighth application icon). In addition, in a case that the last application icon in the p^{th} column of the second page is not the fifth target application icon, the electronic device may continue moving the application icon in the p^{th} column of the first page in the direction away from the fifth position until the electronic device displays the fifth target application icon on the first page.

For example, with reference to FIG. 10, as shown in FIG. 11, after the user performs the third input on the first control 46, the mobile phone may update the application icon 11, the application icon 12, the application icon 13, and the application icon 14 in the 1^{st} row of the first page to an application icon 45, an application icon 46, an application icon 47, and an application icon 44, thereby displaying the application icon 44 on the first page.

Optionally, in this embodiment of this application, in a case that the fifth target application icon is a plurality of application icons, the user may perform a second sub-input on the first control, so that the electronic device can update the application icon in the q^{th} row or the application icon in the p^{th} column of the first page, thereby displaying an application icon of the fifth target application icon on the first page. Then, the user may perform another second sub-input on the first control, so that the electronic device can update the application icon in the q^{th} row or the application icon in the p^{th} column of the first page again to display another application icon in the fifth target application icon on the first page. Other cases can be deduced by analogy until a last application icon in the fifth target application icon is displayed on the first page.

Optionally, in this embodiment of this application, the electronic device can cancel displaying of the first control after the electronic device displays the last application icon in the fifth target application icon on the first page.

In this embodiment of this application, in a case that the electronic device displays the first page, if an application corresponding to a certain application icon on the second page receives a notification message, the user may directly perform an input on the first control on the first page, so that the electronic device can display the certain application icon on the first page. Therefore, the user can perform an input on the certain application icon, so that the electronic device can enable the application.

In this embodiment of this application, in a case that the first page is displayed, the electronic device can display the first control on the first page if the application corresponding to the fifth target application icon receives the target message, so that the user can directly perform an input on the first control, and the electronic device can update the application icon in the q^{th} row or the application icon in the p^{th} column of the first page to display the fifth target application icon on the first page. In this way, the user can perform an input on the fifth target application icon quickly, so that the electronic device can enable the application corresponding to the fifth target application icon. Therefore, use experience of the user can be improved.

It should be noted that, the application icon display method provided in this embodiment of this application may be executed by an application icon display apparatus, or a control module that is in the application icon display apparatus and that is used for performing the application icon display method. In this embodiment of this application, an example in which the application icon display apparatus executes the application icon display method is used to describe the application icon display apparatus provided in the embodiments of this application.

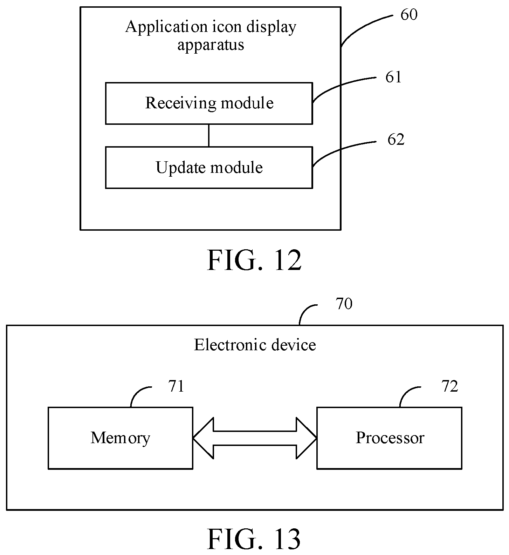

FIG. 12 is a possible schematic structural diagram of an application icon display apparatus according to an embodiment of this application. As shown in FIG. 12, the application icon display apparatus 60 may include a receiving module 61 and an updating module 62.

The receiving module 61 is configured to: in a case that a first page is displayed, receive a first input performed by a user, where the first page includes a plurality of application icons, the first input is an input performed by the user on a first target application icon in the plurality of application icons, the first target application icon is at least one of an application icon in an i^{th} row or an application icon in a j^{th} column of the plurality of application icons, and both i and j are positive integers. The updating module 62 is configured to update a second target application icon in the plurality of application icons in response to the first input received by the receiving module 61, where the second target application icon is an application icon in the first target application icon or is an application icon that is on the first page and that is associated with the first input.

In a possible implementation, the first input is a slide input performed by the user on the first target application icon, the first target application icon is the application icon in the i^{th} row or the application icon in the j^{th} column, and the second target application icon is an application icon in the first target application icon. The updating module 62 is specifically configured to move the second target application icon from the first page to a second page in response to the slide input, update positions of other application icons, and move a third target application icon on the second page to the first page. The other application icons are application icons, except the second target application icon, in the first target application icon; and the third target application icon is an application icon in an i^{th} row or an application icon in a j^{th} column of the second page.

In a possible implementation, the updating module 62 is specifically configured to move the second target application icon to a first position based on a slide direction of the slide input, sequentially move each application icon of the other application icons to a next position in the slide direction, and move the third target application icon to a second position. The first position is any one of the following: a 1^{st} position in the i^{th} row of the second page, a last position in the i^{th} row of the second page, a 1^{st} position in the j^{th} column of the second page, and a last position in the j^{th} column of the second page; and the second position is any one of the following: a 1^{st} position in the i^{th} row of the first page, a last position in the i^{th} row of the first page, a 1^{st} position in the j^{th} column of the first page, and a last position in the j^{th} column of the first page.

In a possible implementation, the first target application icon is the application icon in the i^{th} row, the slide direction is a first direction or a second direction, and the second direction is opposite the first direction; and if the slide direction is the first direction, the second target application icon is a last application icon in the i^{th} row, the first position is the 1^{st} position in the i^{th} row of the second page, the third target application icon is a last application icon in the i^{th} row of the second page, and the second position is the 1^{st} position in the i^{th} row of the first page; or if the slide direction is the second direction, the second target application icon is a 1^{st} application icon in the i^{th} row, the first position is the last position in the i^{th} row of the second page, the third target application icon is a 1^{st} application icon in the i^{th} row of the second page, and the second position is the last position in the i^{th} row of the first page.

In a possible implementation, the first target application icon is the application icon in the j^{th} column, the slide direction is a third direction or a fourth direction, and the fourth direction is opposite the third direction; and if the slide direction is the third direction, the second target application icon is a last application icon in the j^{th} column, the first position is the 1^{st} position in the j^{th} column of the second page, the third target application icon is a last application icon in the j^{th} column of the second page, and the second position is the 1^{st} position in the j^{th} column of the first page; or if the slide direction is the fourth direction, the second target application icon is a 1^{st} application icon in the j^{th} column, the first position is the last position in the j^{th} column of the second page, the third target application icon is a 1^{st} application icon in the j^{th} column of the second page, and the second position is the last position in the j^{th} column of the first page.

In a possible implementation, the receiving module 61 is further configured to receive a second input performed by the user before receiving the first input performed by the user. The second input is an input performed by the user on a fourth target application icon; and the fourth target application icon is an application icon in an i^{th} row or an application icon in a j^{th} column of the first page. The application icon display apparatus 60 provided in this embodiment of this application may further include a control module. The control module is configured to control the fourth target application icon to be in a locked state in response to the second input received by the receiving module 61. The updating module 62 is specifically configured to update application icons, except the fourth target application icon, in the application icons in the i^{th} row of the first page; or the updating module 62 is specifically configured to update application icons, except the fourth target application icon, in the application icons in the j^{th} column of the first page.

In a possible implementation, the second target application icon is an application icon that is on the first page and that is associated with the first input. The updating module 62 is specifically configured to: if an input feature of the first input matches a preset input feature, determine an application icon that is on the first page and that is associated with the preset input feature as the second target application icon, move the second target application icon from a third position on the first page to a preset position on the first page, and move an application icon at the preset position to the third position.

In a possible implementation, the second target application icon is an application icon that is on the first page and that is associated with the first input. The updating module 62 is specifically configured to: if an input feature of the first input matches a preset input feature, determine an application icon that is on the second page and that is associated with the preset input feature as the second target application icon, move the second target application icon from a fourth position on the second page to a preset position on the first page, and move an application icon at the preset position to the fourth position.

In a possible implementation, the receiving module 61 is further configured to receive a third input performed by the user before receiving the first input performed by the user, where the third input is an input performed by the user on a fifth target application icon on the first page. The application icon display apparatus 60 provided in this embodiment of this application may further include a marking module and an establishment module. The marking module is configured to select and mark the fifth target application icon from the first page in response to the third input received by the receiving module 61. The receiving module 61 is further configured to receive a fourth input performed by the user, where the fourth input is an input performed by the user on a sixth target application icon on the first page, the sixth target application icon is at least one of an application icon in a g^{th} row or an application icon in an h^{th} column, and both g and h are positive integers. The establishment module is configured to establish an association relationship between an input feature of the fourth input and the fifth target application icon in response to the fourth input received by the receiving module 61.

In a possible implementation, the application icon display apparatus 60 provided in this embodiment of this application may further include a display module. The display module is configured to: before the receiving module 61 receives the first input performed by the user, display a first control at a fifth position on the first page if an application corresponding to a fifth target application icon on a second page receives a target message, where the fifth target application icon is an application icon in a q^{th} row or an application icon in a p^{th} column of the second page, the fifth position is a position that is on the first page and that corresponds to the fifth target application icon, and the first control is configured to display the fifth target application icon on the first page. The receiving module 61 is further configured to receive a third input performed by the user on the first control. The updating module 62 is further configured to update an application icon in a q^{th} row or an application icon in a p^{th} column of the first page in response to the third input received by the receiving module 61, to display the fifth target application icon on the first page.

According to the application icon display apparatus in this embodiment of this application, because the user can enable an electronic device to update the second target application icon on the first page according to the first input for the first target application icon, instead of updating all application icons on the first page, the application icon display flexibility of the electronic device can be improved.

The application icon display apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in this embodiment of this application.

The application icon display apparatus in this embodiment of this application may be an apparatus with an operating system. The operating system may be an Android (Android) operating system, an iOS operating system, or another possible operating system, which is not specifically limited in this embodiment of this application.

The application icon display apparatus provided in this embodiment of this application can implement the processes implemented by the application icon display apparatus in the method embodiments of FIG. 1 to FIG. 11. To avoid repetition, details are not described herein again.

The embodiment of FIG. 13 is not covered by the claimed invention.

Optionally, as shown in FIG. 13, an embodiment of this application further provides an electronic device 70, including a processor 72, a memory 71, and a program or an instruction stored in the memory 71 and executable on the processor 72. When the program or the instruction is executed by the processor 72, the processes of the foregoing embodiments of the application icon display method are implemented, with the same technical effects achieved. To avoid repetition, details are not described herein again.

It should be noted that the electronic device in this embodiment of this application includes the mobile electronic device and the non-mobile electronic device described above.

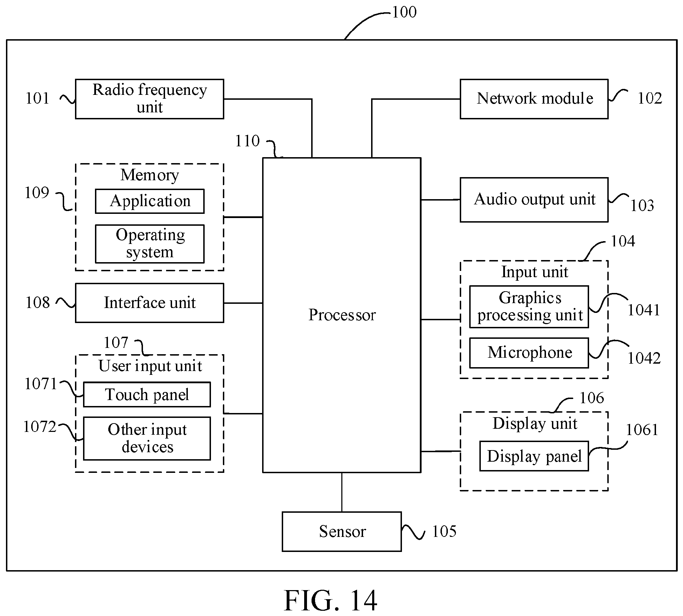

The embodiment of FIG. 14 is not covered by the claimed invention.

FIG. 14 is a schematic diagram of a hardware structure of an electronic device according to an embodiment of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the electronic device 100 may further include a power supply (for example, a battery) that supplies power to the components. The power supply may be logically connected to the processor 110 by using a power management system, so as to implement functions such as charging management, discharging management, and power consumption management by using the power management system. The electronic device is not limited to the electronic device structure shown in FIG. 14. The electronic device may include more or fewer components than those shown in the figure, or combine some of the components, or arrange the components differently. Details are not described herein.

In a case that a first page is displayed, the user input unit 107 receives a first input performed by a user, where the first page includes a plurality of application icons, the first input is an input performed by the user on a first target application icon in the plurality of application icons, the first target application icon is at least one of an application icon in an i^{th} row or an application icon in a j^{th} column of the plurality of application icons, and both i and j are positive integers.

The processor 110 is configured to update a second target application icon in the plurality of application icons in response to the first input, where the second target application icon is an application icon in the first target application icon or is an application icon that is on the first page and that is associated with the first input.

According to the electronic device in this embodiment of this application, because the user can enable the electronic device to update the second target application icon on the first page according to the first input for the first target application icon, instead of updating all application icons on the first page, the application icon display flexibility of the electronic device can be improved.

Optionally, the processor 110 is specifically configured to move the second target application icon from the first page to a second page in response to the slide input, update positions of other application icons, and move a third target application icon on the second page to the first page.

The other application icons are application icons, except the second target application icon, in the first target application icon; and in a case that the first target application icon is the application icon in the i^{th} row, the third target application icon is an application icon in an i^{th} row of the second page; or in a case that the first target application icon is the application icon in the j^{th} column, the third target application icon is an application icon in a j^{th} column of the second page.

In this embodiment of this application, the user can update some application icons on the first page by performing the slide input on the some application icons to: move an application icon in the some application icons to the second page, and move another application icon on the second page to the first page, instead of updating all application icons on the first page. Therefore, the application icon display flexibility of the electronic device can be improved.

Optionally, the processor 110 is specifically configured to move the second target application icon to a first position based on a slide direction of the slide input, sequentially move each application icon of the other application icons to a next position in the slide direction, and move the third target application icon to a second position.

The first position is any one of the following: a 1^{st} position in the i^{th} row of the second page, a last position in the i^{th} row of the second page, a 1^{st} position in the j^{th} column of the second page, and a last position in the j^{th} column of the second page; and the second position is any one of the following: a 1^{st} position in the i^{th} row of the first page, a last position in the i^{th} row of the first page, a 1^{st} position in the j^{th} column of the first page, and a last position in the j^{th} column of the first page.

In this embodiment of this application, the electronic device can move a second target application icon to a first position based on a slide direction of a slide input performed by a user, separately move other application icons to a next position in the slide direction, and move a third target application icon to a second position, so that the user can update the second target application icon as required, to improve use experience of the user.

Optionally, the processor 110 is specifically configured to: if an input feature of the first input matches a preset input feature, determine an application icon that is on the first page and that is associated with the preset input feature as the second target application icon, move the second target application icon from a third position on the first page to a preset position on the first page, and move an application icon at the preset position to the third position.

In this embodiment of this application, because the electronic device can directly move, based on the input feature of the input performed by the user, a certain application icon associated with the preset input feature to the preset position in a case that the input feature matches the preset input feature, so that the user can perform the input on the certain application icon quickly. Therefore, use experience of the user can be improved.

Optionally, the processor 110 is specifically configured to: if an input feature of the first input matches a preset input feature, determine an application icon that is on the second page and that is associated with the preset input feature as the second target application icon, move the second target application icon from a fourth position on the second page to a preset position on the first page, and move an application icon at the preset position to the fourth position.

In this embodiment of this application, because the electronic device can directly move, based on the input feature of the input performed by the user, a certain application icon that is on the second page and that is associated with the preset input feature to the preset position on the first page in a case that the input feature matches the preset input feature, so that the user can perform the input on the certain application icon quickly. Therefore, use experience of the user can be improved.

Optionally, the display unit 106 is configured to display a first control at a fifth position on the first page if an application corresponding to a fifth target application icon on a second page receives a target message, where the fifth target application icon is an application icon in a q^{th} row or an application icon in a p^{th} column of the second page, the fifth position is a position that is on the first page and that corresponds to the fifth target application icon, and the first control is configured to display the fifth target application icon on the first page.

The user input unit 107 is further configured to receive a third input performed by the user on the first control.

The processor 110 is further configured to update an application icon in a q^{th} row or an application icon in a p^{th} column of the first page in response to the third input, to display the fifth target application icon on the first page, where both q and p are positive integers.

In this embodiment of this application, in a case that the first page is displayed, the electronic device can display the first control on the first page if the application corresponding to the fifth target application icon receives the target message, so that the user can directly perform an input on the first control, and the electronic device can update the application icon in the q^{th} row or the application icon in the p^{th} column of the first page to display the fifth target application icon on the first page. In this way, the user can perform an input on the fifth target application icon quickly, so that the electronic device can enable the application corresponding to the fifth target application icon. Therefore, use experience of the user can be improved.

It should be understood that in this embodiment of this application, the input unit 104 may include a graphics processing unit (Graphics Processing Unit, GPU) 1041 and a microphone 1042, and the graphics processing unit 1041 processes image data of a static image or a video obtained by an image capture apparatus (for example, a camera) in a video capture mode or an image capture mode. The display unit 106 may include a display panel 1061. The display panel 1061 may be configured in a form of a liquid crystal display, an organic light-emitting diode, or the like. The user input unit 107 may include a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a functional key (for example, a volume control key or a power on/off key), a trackball, a mouse, and a joystick. Details are not described herein. The memory 109 may be configured to store a software program and various data, including but is not limited to an application program and an operating system. The processor 110 may be integrated with an application processor and a modem processor. The application processor mainly processes an operating system, a user interface, an application program, and the like. The modem processor mainly processes wireless communication. It can be understood that, alternatively, the modem processor may not be integrated into the processor 110.

An embodiment of this application further provides readable storage medium, storing a program or instructions, where the computer program or instructions, when executed by a processor, implement the processes of the embodiments of the application icon display method, and can achieve the same technical effects. To avoid repetition, details are not described herein again.

The processor is a processor in the electronic device described in the foregoing embodiments. The readable storage medium includes a computer-readable storage medium, for example, a computer read-only memory (Read-Only Memory, ROM), a random access memory (Random Access Memory, RAM), a magnetic disk, an optical disc, or the like.

An embodiment of this application further provides a chip, including a processor and a communications interface coupled to each other, the processor being configured to run a program or instructions to implement the processes of the embodiments of the application icon display method, and can achieve the same technical effects. To avoid repetition, details are not described herein again.

It may be understood that, the chip mentioned in the embodiments of this application may also be referred to as a system-level chip, a system chip, a chip system, a system on chip, or the like.

It is to be noted that, the terms "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Unless otherwise specified, elements defined by the sentence "including one" does not exclude that there are still other same elements in the processes, methods, objects, or apparatuses. In addition, it is to be noted that, the scope of the method and the apparatus in the embodiments of this application is not limited to executing functions in an order shown or discussed, and may also include executing the functions in a substantially simultaneous manner or in a reverse order according to involved functions. For example, the described method may be performed in an order different from that described order, and various steps may also be added, omitted, or combined. In addition, features described with reference to some examples may be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the prior art may be implemented in the form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are merely illustrative rather than limitative.

## Claims

1. An application icon display method, wherein the method comprises:
in a case that a first page is displayed, receiving a first input performed by a user (101), wherein the first page comprises a plurality of application icons, the first input is an input performed by the user on a first target application icon in the plurality of application icons, the first target application icon is at least one of an application icon in an i^{th} row or an application icon in a j^{th} column of the plurality of application icons, and both i and j are positive integers; and updating a second target application icon in the plurality of application icons in response to the first input (102),
wherein the second target application icon is an application icon in the first target application icon or is an application icon that is on the first page and that is associated with the first input;
**characterized in that** before the receiving a first input performed by a user, the method further comprises:
displaying a first control at a first position on the first page if an application corresponding to a third target application icon on a second page receives a target message (401), wherein the third target application icon is an application icon in a q^{th} row or an application icon in a p^{th} column of the second page, the first position is a position that is on the first page and that corresponds to the third target application icon, and the first control is configured to display the third target application icon on the first page;
receiving a second input performed by the user on the first control (402); and
updating an application icon in a q^{th} row or an application icon in a p^{th} column of the first page in response to the second input, to display the third target application icon on the first page (403), wherein both q and p are positive integers.

2. The method according to claim 1, wherein the first input is a slide input performed by the user on the first target application icon, the first target application icon is the application icon in the i^{th} row or the application icon in the j^{th} column, and the second target application icon is an application icon in the first target application icon; and
the updating the second target application icon in the plurality of application icons in response to the first input comprises:
moving the second target application icon from the first page to a second page in response to the slide input, updating positions of other application icons, and moving a fourth target application icon on the second page to the first page (102a), wherein
the other application icons are application icons, except the second target application icon, in the first target application icon; and in a case that the first target application icon is the application icon in the i^{th} row, the fourth target application icon is an application icon in an i^{th} row of the second page; or in a case that the first target application icon is the application icon in the j^{th} column, the fourth target application icon is an application icon in a j^{th} column of the second page.

3. The method according to claim 2, wherein the moving the second target application icon from the first page to the second page in response to the slide input, updating positions of other application icons, and moving the fourth target application icon on the second page to the first page comprises:
moving the second target application icon to a second first position based on a slide direction of the slide input, sequentially moving each application icon of the other application icons to a next position in the slide direction, and moving the fourth target application icon to a third position, wherein
the second position is any one of the following: a 1^{st} position in the i^{th} row of the second page, a last position in the i^{th} row of the second page, a 1^{st} position in the j^{th} column of the second page, and a last position in the j^{th} column of the second page; and the third position is any one of the following: a 1^{st} position in the i^{th} row of the first page, a last position in the i^{th} row of the first page, a 1^{st} position in the j^{th} column of the first page, and a last position in the j^{th} column of the first page.

4. The method according to claim 3, wherein the first target application icon is the application icon in the i^{th} row, the slide direction is a first direction or a second direction, and the second direction is opposite the first direction; and
if the slide direction is the first direction, the second target application icon is a last application icon in the i^{th} row, the second position is the 1^{st} position in the i^{th} row of the second page, the fourth target application icon is a last application icon in the i^{th} row of the second page, and the third position is the 1^{st} position in the i^{th} row of the first page; or
if the slide direction is the second direction, the second target application icon is a 1^{st} application icon in the i^{th} row, the second position is the last position in the i^{th} row of the second page, the fourth target application icon is a 1^{st} application icon in the i^{th} row of the second page, and the third position is the last position in the i^{th} row of the first page.

5. The method according to claim 3, wherein the first target application icon is the application icon in the j^{th} column, the slide direction is a third direction or a fourth direction, and the fourth direction is opposite the third direction; and
if the slide direction is the third direction, the second target application icon is a last application icon in the j^{th} column, the second position is the 1^{st} position in the j^{th} column of the second page, the fourth target application icon is a last application icon in the j^{th} column of the second page, and the third position is the 1^{st} position in the j^{th} column of the first page; or
if the slide direction is the fourth direction, the second target application icon is a 1^{st} application icon in the j^{th} column, the second position is the last position in the j^{th} column of the second page, the fourth off target application icon is a 1^{st} application icon in the j^{th} column of the second page, and the third position is the last position in the j^{th} column of the first page.

6. The method according to claim 1, wherein the second target application icon is an application icon that is on the first page and that is associated with the first input; and
the updating the second target application icon in the plurality of application icons in response to the first input comprises:
if an input feature of the first input matches a preset input feature, determining an application icon that is on the first page and that is associated with the preset input feature as the second target application icon, moving the second target application icon from a fourth position on the first page to a preset position on the first page, and moving an application icon at the preset position to the fourth position.

7. The method according to claim 1, wherein the second target application icon is an application icon that is on the first page and that is associated with the first input; and
the updating the second target application icon in the plurality of application icons in response to the first input comprises:
if an input feature of the first input matches a preset input feature, determining an application icon that is on the second page and that is associated with the preset input feature as the second target application icon, moving the second target application icon from a fifth position on the second page to a preset position on the first page, and moving an application icon at the preset position to the fifth position.

8. An application icon display apparatus (60), wherein the application icon display apparatus (60) comprises a receiving module (61) and an updating module (62), wherein
the receiving module (61) is configured to: in a case that a first page is displayed, receive a first input performed by a user, wherein the first page comprises a plurality of application icons, the first input is an input performed by the user on a first target application icon in the plurality of application icons, the first target application icon is at least one of an application icon in an i^{th} row or an application icon in a j^{th} column of the plurality of application icons, and both i and j are positive integers; and
the updating module (62) is configured to update a second target application icon in the plurality of application icons in response to the first input received by the receiving module (61), wherein the second target application icon is an application icon in the first target application icon or is an application icon that is on the first page and that is associated with the first input;
**characterized in that** the application icon display apparatus further comprises a display module, wherein
the display module is configured to: before the receiving module receives the first input performed by the user, display a first control at a first position on the first page if an application corresponding to a third target application icon on a second page receives a target message, wherein the third target application icon is an application icon in a q^{th} row or an application icon in a p^{th} column of the second page, the first position is a position that is on the first page and that corresponds to the third target application icon, and the first control is configured to display the third target application icon on the first page;
the receiving module is further configured to receive a second input performed by the user on the first control; and
the updating module is further configured to update an application icon in a q^{th} row or an application icon in a p^{th} column of the first page in response to the second input received by the receiving module, to display the third target application icon on the first page, wherein both q and p are positive integers.

9. The application icon display apparatus (60) according to claim 8, wherein the first input is a slide input performed by the user on the first target application icon, the first target application icon is the application icon in the i^{th} row or the application icon in the j^{th} column, and the second target application icon is an application icon in the first target application icon; and
the updating module (62) is specifically configured to move the second target application icon from the first page to the second page in response to the slide input, update positions of other application icons, and move a fourth target application icon on the second page to the first page,
wherein
the other application icons are application icons, except the second target application icon, in the first target application icon; and in a case that the first target application icon is the application icon in the i^{th} row, the fourth target application icon is an application icon in an i^{th} row of the second page; or in a case that the first target application icon is the application icon in the j^{th} column, the fourth target application icon is an application icon in a j^{th} column of the second page.

10. The application icon display apparatus (60) according to claim 9, wherein the updating module (62) is specifically configured to move the second target application icon to a second position based on a slide direction of the slide input, sequentially move each application icon of the other application icons to a next position in the slide direction, and move the fourth target application icon to a third position, wherein the second position is any one of the following: a 1^{st} position in the i^{th} row of the second page, a last position in the i^{th} row of the second page, a 1^{st} position in the j^{th} column of the second page, and a last position in the j^{th} column of the second page; and the third position is any one of the following: a 1^{st} position in the i^{th} row of the first page, a last position in the i^{th} row of the first page, a 1^{st} position in the j^{th} column of the first page, and a last position in the j^{th} column of the first page.

11. The application icon display apparatus (60) according to claim 10, wherein the first target application icon is the application icon in the i^{th} row, the slide direction is a first direction or a second direction, and the second direction is opposite the first direction; and
if the slide direction is the first direction, the second target application icon is a last application icon in the i^{th} row, the second position is the 1^{st} position in the i^{th} row of the second page, the fourth target application icon is a last application icon in the i^{th} row of the second page, and the third position is the 1^{st} position in the i^{th} row of the first page; or
if the slide direction is the second direction, the second target application icon is a 1^{st} application icon in the i^{th} row, the second position is the last position in the i^{th} row of the second page, the fourth target application icon is a 1^{st} application icon in the i^{th} row of the second page, and the third position is the last position in the i^{th} row of the first page.

12. The application icon display apparatus (60) according to claim 10, wherein the first target application icon is the application icon in the j^{th} column, the slide direction is a third direction or a fourth direction, and the third direction is opposite the fourth direction; and
if the slide direction is the third direction, the second target application icon is a last application icon in the j^{th} column, the second position is the 1^{st} position in the j^{th} column of the second page, the fourth target application icon is a last application icon in the j^{th} column of the second page, and the third position is the 1^{st} position in the j^{th} column of the first page; or
if the slide direction is the fourth direction, the second target application icon is a 1^{st} application icon in the j^{th} column, the second position is the last position in the j^{th} column of the second page, the fourth target application icon is a 1^{st} application icon in the j^{th} column of the second page, and the third position is the last position in the j^{th} column of the first page.

13. The application icon display apparatus (60) according to claim 8, wherein the second target application icon is an application icon that is on the first page and that is associated with the first input; and
the updating module (62) is specifically configured to: if an input feature of the first input matches a preset input feature, determine an application icon that is on the first page and that is associated with the preset input feature as the second target application icon, move the second target application icon from a fourth position on the first page to a preset position on the first page, and move an application icon at the preset position to the fourth position.

14. The application icon display apparatus (60) according to claim 8, wherein the second target application icon is an application icon that is on the first page and that is associated with the first input; and
the updating module (62) is specifically configured to: if an input feature of the first input matches a preset input feature, determine an application icon that is on the second page and that is associated with the preset input feature as the second target application icon, move the second target application icon from a fifth position on the second page to a preset position on the first page, and move an application icon at the preset position to the fifth fourth position.

## Patentansprüche

1. Verfahren zur Anzeige von Anwendungssymbolen, wobei das Verfahren Folgendes umfasst:
in einem Fall, in dem eine erste Seite angezeigt wird, Empfangen einer ersten Eingabe, die von einem Benutzer (101) durchgeführt wird,
wobei die erste Seite eine Vielzahl von Anwendungssymbolen umfasst, die erste Eingabe eine Eingabe ist, die vom Benutzer an einem ersten Zielanwendungssymbol in der Vielzahl von Anwendungssymbolen durchgeführt wird, das erste Zielanwendungssymbol mindestens eines von einem Anwendungssymbol in einer i-ten Zeile oder einem Anwendungssymbol in der j-ten Spalte der Vielzahl von Anwendungssymbolen ist und sowohl i als auch j positive ganze Zahlen sind; und
Aktualisieren eines zweiten Zielanwendungssymbols in der Vielzahl von Anwendungssymbolen als Reaktion auf die erste Eingabe (102),
wobei das zweite Zielanwendungssymbol ein Anwendungssymbol in dem ersten Zielanwendungssymbol oder ein Anwendungssymbol ist, das sich auf der ersten Seite befindet und der ersten Eingabe zugeordnet ist;
**dadurch gekennzeichnet, dass** das Verfahren vor dem Empfangen einer ersten Eingabe, die von einem Benutzer durchgeführt wird, ferner Folgendes umfasst:
Anzeigen eines ersten Steuerelements an einer ersten Position auf der ersten Seite, wenn eine Anwendung, die einem dritten Zielanwendungssymbol auf einer zweiten Seite entspricht, eine Zielnachricht (401) empfängt, wobei das dritte Zielanwendungssymbol ein Anwendungssymbol in einer q-ten Zeile oder ein Anwendungssymbol in einer p-ten Spalte der zweiten Seite ist, die erste Position eine Position ist, die sich auf der ersten Seite befindet und die dem dritten Zielanwendungssymbol entspricht, und das erste Steuerelement dazu konfiguriert ist, das dritte Zielanwendungssymbol auf der ersten Seite anzuzeigen;
Empfangen einer zweiten Eingabe, die vom Benutzer an dem ersten Steuerelement (402) durchgeführt wird; und
Aktualisieren eines Anwendungssymbols in einer q-ten Zeile oder eines Anwendungssymbols in einer p-ten Spalte der ersten Seite als Reaktion auf die zweite Eingabe, um das dritte Zielanwendungssymbol auf der ersten Seite (403) anzuzeigen, wobei sowohl q als auch p positive ganze Zahlen sind.

2. Verfahren nach Anspruch 1, wobei die erste Eingabe eine Folieneingabe ist, die vom Benutzer an dem ersten Zielanwendungssymbol durchgeführt wird, das erste Zielanwendungssymbol das Anwendungssymbol in der i-ten Zeile oder das Anwendungssymbol in der j-ten Spalte ist und das zweite Zielanwendungssymbol ein Anwendungssymbol in dem ersten Zielanwendungssymbol ist; und
das Aktualisieren des zweiten Zielanwendungssymbols in der Vielzahl von Anwendungssymbolen als Reaktion auf die erste Eingabe Folgendes umfasst:
Verschieben des zweiten Zielanwendungssymbols von der ersten Seite zu einer zweite Seite als Reaktion auf die Folieneingabe, Aktualisieren der Positionen anderer Anwendungssymbole und Verschieben eines vierten Zielanwendungssymbols auf der zweiten Seite zu der ersten Seite (102a), wobei die anderen Anwendungssymbole Anwendungssymbole, mit Ausnahme des zweiten Zielanwendungssymbols, im ersten Zielanwendungssymbol sind; und in einem Fall, in dem das erste Zielanwendungssymbol das Anwendungssymbol in der i-ten Zeile ist, ist das vierte Zielanwendungssymbol ein Anwendungssymbol in einer i-ten Zeile der zweiten Seite;
oder in einem Fall, in dem das erste Zielanwendungssymbol das Anwendungssymbol in der j-ten Spalte ist, ist das vierte Zielanwendungssymbol ein Anwendungssymbol in einer j-ten Spalte der zweiten Seite.

3. Verfahren nach Anspruch 2, wobei das Verschieben des zweiten Zielanwendungssymbols von der ersten Seite zu der zweiten Seite als Reaktion auf die Folieneingabe, Aktualisieren von Positionen anderer Anwendungssymbole und Verschieben des vierten Zielanwendungssymbols auf der zweiten Seite zu der ersten Seite umfassen:
Verschieben des zweiten Zielanwendungssymbols in eine zweite Position basierend auf einer Folienrichtung der Folieneingabe, sequentielles Verschieben eines jeden Anwendungssymbols der anderen Anwendungssymbole in eine nächste Position in der Folienrichtung und Verschieben des vierten Zielanwendungssymbols in eine dritte Position, wobei
die zweite Position eine beliebige der folgenden ist: eine 1. Position in der i-ten Zeile der zweiten Seite, eine letzte Position in der i-ten Zeile der zweiten Seite, eine 1. Position in der j-ten Spalte der zweiten Seite und eine letzte Position in der j-ten Spalte der zweiten Seite; und die dritte Position ist eine beliebige der folgenden: eine 1. Position in der i-ten Zeile der ersten Seite, eine letzte Position in der i-ten Zeile der ersten Seite, eine 1. Position in der j-ten Spalte der ersten Seite und eine letzte Position in der j-ten Spalte der ersten Seite.

4. Verfahren nach Anspruch 3, wobei das erste Zielanwendungssymbol das Anwendungssymbol in der i-ten Zeile ist, die Folienrichtung eine erste Richtung oder eine zweite Richtung ist und die zweite Richtung der ersten Richtung entgegengesetzt ist; und
wenn die Folienrichtung die erste Richtung ist, ist das zweite Zielanwendungssymbol ein letztes Anwendungssymbol in der i-ten Zeile, die zweite Position ist die 1. Position in der i-ten Zeile der zweiten Seite, das vierte Zielanwendungssymbol ist ein letztes Anwendungssymbol in der i-ten Zeile der zweiten Seite, und die dritte Position ist die 1. Position in der i-ten Zeile der ersten Seite; oder wenn die Folienrichtung die zweite Richtung ist, ist das zweite Zielanwendungssymbol ein 1. Anwendungssymbol in der i-ten Zeile, die zweite Position ist die letzte Position in der i-ten Zeile der zweiten Seite, das vierte Zielanwendungssymbol ist ein 1. Anwendungssymbol in der i-ten Zeile der zweiten Seite, und die dritte Position ist die letzte Position in der i-ten Zeile der ersten Seite.

5. Verfahren nach Anspruch 3, wobei das erste Zielanwendungssymbol das Anwendungssymbol in der j-ten Spalte ist, die Folienrichtung eine dritte Richtung oder eine vierte Richtung ist und die vierte Richtung der dritten Richtung entgegengesetzt ist; und
wenn die Folienrichtung die dritte Richtung ist, ist das zweite Zielanwendungssymbol ein letztes Anwendungssymbol in der j-ten Spalte, die zweite Position ist die 1. Position in der j-ten Spalte der zweiten Seite, das vierte Zielanwendungssymbol ist ein letztes Anwendungssymbol in der j-ten Spalte der zweiten Seite, und die dritte Position ist die 1. Position in der j-ten Spalte der ersten Seite; oder
wenn die Folienrichtung die vierte Richtung ist, ist das zweite Zielanwendungssymbol ein 1. Anwendungssymbol in der j-ten Spalte, die zweite Position ist die letzte Position in der j-ten Spalte der zweiten Seite, das vierte Zielanwendungssymbol ist ein 1. Anwendungssymbol in der j-ten Spalte der zweiten Seite und die dritte Position ist die letzte Position in der j-ten Spalte der ersten Seite.

6. Verfahren nach Anspruch 1, wobei das zweite Zielanwendungssymbol ein Anwendungssymbol ist, das sich auf der ersten Seite befindet und der ersten Eingabe zugeordnet ist; und
das Aktualisieren des zweiten Zielanwendungssymbols in der Vielzahl von Anwendungssymbolen als Reaktion auf die erste Eingabe Folgendes umfasst:
wenn eine Eingabefunktion der ersten Eingabe mit einer voreingestellten Eingabefunktion übereinstimmt, Bestimmen eines Anwendungssymbols, das sich auf der ersten Seite befindet und der voreingestellten Eingabefunktion zugeordnet ist, als das zweite Zielanwendungssymbol, Verschieben des zweiten Zielanwendungssymbols von einer vierten Position auf der ersten Seite in eine voreingestellte Position auf der ersten Seite und Verschieben eines Anwendungssymbols an der voreingestellten Position in die vierte Position.

7. Verfahren nach Anspruch 1, wobei das zweite Zielanwendungssymbol ein Anwendungssymbol ist, das sich auf der ersten Seite befindet und der ersten Eingabe zugeordnet ist; und
das Aktualisieren des zweiten Zielanwendungssymbols in der Vielzahl von Anwendungssymbolen als Reaktion auf die erste Eingabe Folgendes umfasst:
wenn eine Eingabefunktion der ersten Eingabe mit einer voreingestellten Eingabefunktion übereinstimmt, Bestimmen eines Anwendungssymbols, das sich auf der zweiten Seite befindet und der voreingestellten Eingabefunktion zugeordnet ist, als das zweite Zielanwendungssymbol, Verschieben des zweiten Zielanwendungssymbols von einer fünften Position auf der zweiten Seite in eine voreingestellte Position auf der ersten Seite und Verschieben eines Anwendungssymbols an der voreingestellten Position in die fünfte Position.

8. Gerät (60) zur Anzeige von Anwendungssymbolen , wobei das Gerät (60) zur Anzeige von Anwendungssymbolen ein Empfangsmodul (61) und ein Aktualisierungsmodul (62) umfasst, wobei das Empfangsmodul (61) konfiguriert ist:
in einem Fall, in dem eine erste Seite angezeigt wird, um eine erste Eingabe, die von einem Benutzer durchgeführt wird, zu empfangen, wobei die erste Seite eine Vielzahl von Anwendungssymbolen umfasst, die erste Eingabe eine Eingabe ist, die vom Benutzer an einem ersten Zielanwendungssymbol in der Vielzahl von Anwendungssymbolen durchgeführt wird, das erste Zielanwendungssymbol mindestens eines von einem Anwendungssymbol in einer i-ten Zeile oder einem Anwendungssymbol in einer j-ten Spalte der Vielzahl von Anwendungssymbolen ist und sowohl i als auch j positive ganze Zahlen sind; und
das Aktualisierungsmodul (62) ist konfiguriert, um ein zweites Zielanwendungssymbol in der Vielzahl von Anwendungssymbolen als Reaktion auf die erste Eingabe, die von dem Empfangsmodul (61) empfangen wird, zu aktualisieren,
wobei das zweite Zielanwendungssymbol ein Anwendungssymbol in dem ersten Zielanwendungssymbol oder ein Anwendungssymbol ist, das sich auf der ersten Seite befindet und der ersten Eingabe zugeordnet ist;
**dadurch gekennzeichnet, dass** das Gerät zur Anzeige von Anwendungssymbolen ferner ein Anzeigemodul umfasst, wobei
das Anzeigemodul konfiguriert ist: bevor das Empfangsmodul die erste Eingabe, die vom Benutzer durchgeführt wird, empfängt, um ein erstes Steuerelement an einem ersten Position auf der ersten Seite anzuzeigen, wenn eine Anwendung, die einem dritten Zielanwendungssymbol auf einer zweiten Seite entspricht, eine Zielnachricht empfängt,
wobei das dritte Zielanwendungssymbol ein Anwendungssymbol in einer q-ten Zeile oder ein Anwendungssymbol in einer p-ten Spalte der zweiten Seite ist, die erste Position eine Position ist, die sich auf der ersten Seite befindet und dem dritten Zielanwendungssymbol entspricht, und das erste Steuerelement ist konfiguriert, um das dritte Zielanwendungssymbol auf der ersten Seite anzuzeigen;
das Empfangsmodul ist ferner dazu konfiguriert, eine zweite Eingabe, die vom Benutzer auf dem ersten Steuerelement durchgeführt wird, zu empfangen; und
das Aktualisierungsmodul ferner dazu konfiguriert ist, ein Anwendungssymbol in einer q-ten Zeile oder ein Anwendungssymbol in einer p-ten Spalte der ersten Seite als Reaktion auf die zweite Eingabe zu aktualisieren, die von dem Empfangsmodul empfangen wurde, um das dritte Zielanwendungssymbol auf der ersten Seite anzuzeigen, wobei sowohl q als auch p positive ganze Zahlen sind.

9. Gerät (60) zur Anzeige von Anwendungssymbolen nach Anspruch 8, wobei die erste Eingabe eine Folieneingabe ist, die vom Benutzer an dem ersten Zielanwendungssymbol durchgeführt wird, das erste Zielanwendungssymbol das Anwendungssymbol in der i-ten Zeile oder das Anwendungssymbol in der j-ten Spalte ist und das zweite Zielanwendungssymbol ein Anwendungssymbol in dem ersten Zielanwendungssymbol ist; und
das Aktualisierungsmodul (62) ist speziell konfiguriert, um das zweite Zielanwendungssymbol von der ersten Seite zu der zweiten Seite als Reaktion auf die Folieneingabe zu verschieben, Positionen anderer Anwendungssymbole zu aktualisieren und ein viertes Zielanwendungssymbol auf der zweiten Seite zu der ersten Seite zu verschieben, wobei
die anderen Anwendungssymbole Anwendungssymbole, mit Ausnahme des zweiten Zielanwendungssymbols, im ersten Zielanwendungssymbol sind; und in einem Fall, in dem das erste Zielanwendungssymbol das Anwendungssymbol in der i-ten Zeile ist, ist das vierte Zielanwendungssymbol ein Anwendungssymbol in einer i-ten Zeile der zweiten Seite; oder in einem Fall, in dem das erste Zielanwendungssymbol das Anwendungssymbol in der j-ten Spalte ist, ist das vierte Zielanwendungssymbol ein Anwendungssymbol in einer j-ten Spalte der zweiten Seite.

10. Gerät (60) zur Anzeige von Anwendungssymbolen nach Anspruch 9, wobei das Aktualisierungsmodul (62) speziell konfiguriert ist, um das zweite Zielanwendungssymbol zu einer zweiten Position basierend auf einer Folienrichtung der Folieneingabe zu verschieben, ein jedes Anwendungssymbol der anderen Anwendungssymbole in eine nächste Position in der Folienrichtung sequentiell zu verschieben und das vierte Zielanwendungssymbol in eine dritte Position, wobei
die zweite Position eine beliebige der folgenden ist:
eine 1. Position in der i-ten Zeile der zweiten Seite,
eine letzte Position in der i-ten Zeile der zweiten Seite, eine 1. Position in der j-ten Spalte der zweiten Seite und eine letzte Position in der j-ten Spalte der zweiten Seite; und die dritte Position ist eine beliebige der folgenden: eine 1. Position in der i-ten Zeile der ersten Seite, eine letzte Position in der i. Zeile der ersten Seite, eine 1. Position in der j-ten Spalte der ersten Seite und eine letzte Position in der j-ten Spalte der ersten Seite.

11. Gerät (60) zur Anzeige von Anwendungssymbolen nach Anspruch 10, wobei das erste Zielanwendungssymbol das Anwendungssymbol in der i-ten Zeile ist, die Folienrichtung eine erste Richtung oder eine zweite Richtung ist und die zweite Richtung der ersten Richtung entgegengesetzt ist; und
wenn die Folienrichtung die erste Richtung ist, ist das zweite Zielanwendungssymbol ein letztes Anwendungssymbol in der i-ten Zeile, die zweite Position ist die 1. Position in der i-ten Zeile der zweiten Seite, das vierte Zielanwendungssymbol ist ein letztes Anwendungssymbol in der i-ten Zeile der zweiten Seite,
und die dritte Position ist die 1. Position in der i-ten Zeile der ersten Seite; oder
wenn die Folienrichtung die zweite Richtung ist, ist das zweite Zielanwendungssymbol ein 1. Anwendungssymbol in der i-ten Zeile, die zweite Position ist die letzte Position in der i-ten Zeile der zweiten Seite, das vierte Zielanwendungssymbol ist ein 1. Anwendungssymbol in der i-ten Zeile der zweiten Seite,
und die dritte Position ist die letzte Position in der i-ten Zeile der ersten Seite.

12. Gerät (60) zur Anzeige von Anwendungssymbolen nach Anspruch 10, wobei das erste Zielanwendungssymbol das Anwendungssymbol in der j-ten Spalte ist, die Folienrichtung eine dritte Richtung oder eine vierte Richtung ist und die dritte Richtung der vierten Richtung entgegengesetzt ist; und
wenn die Folienrichtung die dritte Richtung ist, ist das zweite Zielanwendungssymbol ein letztes Anwendungssymbol in der j-ten Spalte, die zweite Position ist die 1.
Position in der j-ten Spalte der zweiten Seite, das vierte Zielanwendungssymbol ist ein letztes Anwendungssymbol in der j-ten Spalte der zweiten Seite und die dritte Position ist die 1. Position in der j-ten Spalte der ersten Seite; oder
wenn die Folienrichtung die vierte Richtung ist, ist das zweite Zielanwendungssymbol ein 1. Anwendungssymbol in der j-ten Spalte, die zweite Position ist die letzte Position in der j-ten Spalte der zweiten Seite, das vierte Zielanwendungssymbol ist ein 1. Anwendungssymbol in der j-ten Spalte der zweiten Seite und die dritte Position ist die letzte Position in der j-ten Spalte der ersten Seite.

13. Gerät (60) zur Anzeige von Anwendungssymbolen nach Anspruch 8, wobei das zweite Zielanwendungssymbol ein Anwendungssymbol ist, das sich auf der ersten Seite befindet und der ersten Eingabe zugeordnet ist; und
das Aktualisierungsmodul (62) ist speziell konfiguriert: wenn eine Eingabefunktion der ersten Eingabe mit einer voreingestellten Eingabefunktion übereinstimmt, um ein Anwendungssymbol, das sich auf der ersten Seite befindet und der voreingestellten Eingabefunktion zugeordnet ist, als das zweite Zielanwendungssymbol zu bestimmen, das zweite Zielanwendungssymbol von einer vierten Position auf der ersten Seite in eine voreingestellte Position auf der ersten Seite zu verschieben und ein Anwendungssymbol an der voreingestellten Position in die vierte Position zu verschieben.

14. Gerät (60) zur Anzeige von Anwendungssymbolen nach Anspruch 8, wobei das zweite Zielanwendungssymbol ein Anwendungssymbol ist, das sich auf der ersten Seite befindet und der ersten Eingabe zugeordnet ist; und
das Aktualisierungsmodul (62) ist speziell konfiguriert: wenn eine Eingabefunktion der ersten Eingabe mit einer voreingestellten Eingabefunktion übereinstimmt, um ein Anwendungssymbols, das sich auf der zweiten Seite befindet und der voreingestellten Eingabefunktion zugeordnet ist, als das zweite Zielanwendungssymbol, zu bestimmen, das zweite Zielanwendungssymbol von einer fünften Position auf der zweiten Seite in eine voreingestellte Position auf der ersten Seite zu verschieben und ein Anwendungssymbol an der voreingestellten Position in die fünfte Position zu verschieben.

## Revendications

1. Procédé d'affichage d'icône d'application, dans lequel le procédé comprend :
dans le cas où une première page est affichée, recevoir une première entrée effectuée par un utilisateur (101), dans lequel la première page comprend une pluralité d'icônes d'application, la première entrée est une entrée effectuée par l'utilisateur sur une première icône d'application cible dans la pluralité d'icônes d'application, la première icône d'application cible est au moins une icône d'application dans une i^{ème} ligne ou une icône d'application dans une j^{ème} colonne de la pluralité d'icônes d'application, et i et j sont tous deux des entiers positifs ; et
mettre à jour une deuxième icône d'application cible dans la pluralité d'icônes d'application en réponse à la première entrée (102),
dans lequel la deuxième icône d'application cible est une icône d'application dans la première icône d'application cible ou est une icône d'application qui se trouve sur la première page et qui est associée à la première entrée ;
**caractérisé en ce qu'**avant la réception d'une première entrée effectuée par un utilisateur, le procédé comprend en outre :
afficher une première commande à une première position sur la première page si une application correspondant à une troisième icône d'application cible sur une seconde page reçoit un message cible (401), dans lequel la troisième icône d'application cible est une icône d'application dans une q^{ème} ligne ou une icône d'application dans une p^{ème} colonne de la seconde page, la première position est une position qui se trouve sur la première page et qui correspond à la troisième icône d'application cible, et la première commande est configurée pour afficher la troisième icône d'application cible sur la première page ;
recevoir une seconde entrée effectuée par l'utilisateur sur la première commande (402) ; et
mettre à jour une icône d'application dans une q^{ème} ligne ou une icône d'application dans une p^{ème} colonne de la première page en réponse à la seconde entrée, afin d'afficher la troisième icône d'application cible sur la première page (403), dans lequel q et p sont tous deux des entiers positifs.

2. Procédé selon la revendication 1, dans lequel la première entrée est une entrée de glissement effectuée par l'utilisateur sur la première icône d'application cible, la première icône d'application cible est l'icône d'application dans la i^{ème} ligne ou l'icône d'application dans la j^{ème} colonne, et la deuxième icône d'application cible est une icône d'application dans la première icône d'application cible ; et
la mise à jour de la deuxième icône d'application cible dans la pluralité d'icônes d'application en réponse à la première entrée comprend :
déplacer la deuxième icône d'application cible de la première page vers une seconde page en réponse à l'entrée de glissement, mettre à jour les positions des autres icônes d'application, et déplacer une quatrième icône d'application cible sur la seconde page vers la première page (102a), dans lequel
les autres icônes d'application sont des icônes d'application, à l'exception de la deuxième icône d'application cible, dans la première icône d'application cible ; et dans le cas où la première icône d'application cible est l'icône d'application dans la i^{ème} ligne, la quatrième icône d'application cible est une icône d'application dans une i^{ème} ligne de la seconde page ; ou dans le cas où la première icône d'application cible est l'icône d'application dans la j^{ème} colonne, la quatrième icône d'application cible est une icône d'application dans une j^{ème} colonne de la seconde page.

3. Procédé selon la revendication 2, dans lequel le déplacement de la deuxième icône d'application cible de la première page vers la seconde page en réponse à l'entrée de glissement, la mise à jour des positions des autres icônes d'application et le déplacement de la quatrième icône d'application cible sur la seconde page vers la première page comprennent :
déplacer la deuxième icône d'application cible vers une deuxième position sur la base d'une direction de glissement de l'entrée de glissement, déplacer séquentiellement chaque icône d'application parmi les autres icônes d'application vers une position suivante dans la direction de glissement, et déplacer la quatrième icône d'application cible vers une troisième position, dans lequel
la deuxième position est l'une quelconque des suivantes : une 1^{ère} position dans la i^{ème} ligne de la seconde page, une dernière position dans la i^{ème} ligne de la seconde page, une 1^{ère} position dans la j^{ème} colonne de la seconde page et une dernière position dans la j^{ème} colonne de la seconde page ; et la troisième position est l'une quelconque des suivantes : une 1^{ère} position dans la i^{ème} ligne de la première page, une dernière position dans la i^{ème} ligne de la première page, une 1^{ère} position dans la j^{ème} colonne de la première page et une dernière position dans la j^{ème} colonne de la première page.

4. Procédé selon la revendication 3, dans lequel la première icône d'application cible est l'icône d'application dans la i^{ème} ligne, la direction de glissement est une première direction ou une deuxième direction, et la deuxième direction est opposée à la première direction ; et
si la direction de glissement est la première direction, la deuxième icône d'application cible est une dernière icône d'application dans la i^{ème} ligne, la deuxième position est la 1^{ère} position dans la i^{ème} ligne de la seconde page, la quatrième icône d'application cible est une dernière icône d'application dans la i^{ème} ligne de la seconde page, et la troisième position est la 1^{ère} position dans la i^{ème} ligne de la première page ; ou
si la direction de glissement est la deuxième direction, la deuxième icône d'application cible est une 1^{ère} icône d'application dans la i^{ème} ligne, la deuxième position est la dernière position dans la i^{ème} ligne de la seconde page, la quatrième icône d'application cible est une 1^{ère} icône d'application dans la i^{ème} ligne de la seconde page, et la troisième position est la dernière position dans la i^{ème} ligne de la première page.

5. Procédé selon la revendication 3, dans lequel la première icône d'application cible est l'icône d'application dans la j^{ème} colonne, la direction de glissement est une troisième direction ou une quatrième direction, et la quatrième direction est opposée à la troisième direction ; et
si la direction de glissement est la troisième direction, la deuxième icône d'application cible est une dernière icône d'application dans la j^{ème} colonne, la deuxième position est la 1^{ère} position dans la j^{ème} colonne de la seconde page, la quatrième icône d'application cible est une dernière icône d'application dans la j^{ème} colonne de la seconde page, et la troisième position est la 1^{ère} position dans la j^{ème} colonne de la première page ; ou
si la direction de glissement est la quatrième direction, la deuxième icône d'application cible est une 1^{ère} icône d'application dans la j^{ème} colonne, la deuxième position est la dernière position dans la j^{ème} colonne de la seconde page, la quatrième icône d'application cible est une 1^{ère} icône d'application dans la j^{ème} colonne de la seconde page, et la troisième position est la dernière position dans la j^{ème} colonne de la première page.

6. Procédé selon la revendication 1, dans lequel la deuxième icône d'application cible est une icône d'application qui se trouve sur la première page et qui est associée à la première entrée ; et
la mise à jour de la deuxième icône d'application cible dans la pluralité d'icônes d'application en réponse à la première entrée comprend :
si une caractéristique d'entrée de la première entrée correspond à une caractéristique d'entrée prédéfinie, déterminer une icône d'application qui se trouve sur la première page et qui est associée à la caractéristique d'entrée prédéfinie en tant que deuxième icône d'application cible, déplacer la deuxième icône d'application cible d'une quatrième position sur la première page vers une position prédéfinie sur la première page, et déplacer une icône d'application à la position prédéfinie vers la quatrième position.

7. Procédé selon la revendication 1, dans lequel la deuxième icône d'application cible est une icône d'application qui se trouve sur la première page et qui est associée à la première entrée ; et
la mise à jour de la deuxième icône d'application cible dans la pluralité d'icônes d'application en réponse à la première entrée comprend :
si une caractéristique d'entrée de la première entrée correspond à une caractéristique d'entrée prédéfinie, déterminer une icône d'application qui se trouve sur la seconde page et qui est associée à la caractéristique d'entrée prédéfinie en tant que deuxième icône d'application cible, déplacer la deuxième icône d'application cible d'une cinquième position sur la seconde page vers une position prédéfinie sur la première page, et déplacer une icône d'application à la position prédéfinie vers la cinquième position.

8. Appareil d'affichage (60) d'icône d'application, dans lequel l'appareil d'affichage (60) d'icône d'application comprend un module de réception (61) et un module de mise à jour (62), dans lequel le module de réception (61) est configuré pour : dans le cas où une première page est affichée, recevoir une première entrée effectuée par un utilisateur, dans lequel la première page comprend une pluralité d'icônes d'application, la première entrée est une entrée effectuée par l'utilisateur sur une première icône d'application cible dans la pluralité d'icônes d'application, la première icône d'application cible est au moins une icône d'application dans une i^{ème} ligne ou une icône d'application dans une j^{ème} colonne de la pluralité d'icônes d'application, et i et j sont tous deux des entiers positifs ; et
le module de mise à jour (62) est configuré pour mettre à jour une deuxième icône d'application cible dans la pluralité d'icônes d'application en réponse à la première entrée reçue par le module de réception (61), dans lequel la deuxième icône d'application cible est une icône d'application dans la première icône d'application cible ou est une icône d'application qui se trouve sur la première page et qui est associée à la première entrée ;
**caractérisé en ce que** l'appareil d'affichage d'icône d'application comprend en outre un module d'affichage, dans lequel
le module d'affichage est configuré pour : avant que le module de réception ne reçoive la première entrée effectuée par l'utilisateur, afficher une première commande à une première position sur la première page si une application correspondant à une troisième icône d'application cible sur une seconde page reçoit un message cible,
dans lequel la troisième icône d'application cible est une icône d'application dans une q^{ème} ligne ou une icône d'application dans une p^{ème} colonne de la seconde page, la première position est une position qui se trouve sur la première page et qui correspond à la troisième icône d'application cible, et la première commande est configurée pour afficher la troisième icône d'application cible sur la première page ;
le module de réception est en outre configuré pour recevoir une seconde entrée effectuée par l'utilisateur sur la première commande ; et
le module de mise à jour est en outre configuré pour mettre à jour une icône d'application dans une q^{ème} ligne ou une icône d'application dans une p^{ème} colonne de la première page en réponse à la seconde entrée reçue par le module de réception, pour afficher la troisième icône d'application cible sur la première page, dans lequel q et p sont tous deux des entiers positifs.

9. Appareil d'affichage (60) d'icône d'application selon la revendication 8, dans lequel la première entrée est une entrée de glissement effectuée par l'utilisateur sur la première icône d'application cible, la première icône d'application cible est l'icône d'application dans la i^{ème} ligne ou l'icône d'application dans la j^{ème} colonne, et la deuxième icône d'application cible est une icône d'application dans la première icône d'application cible ; et
le module de mise à jour (62) est spécifiquement configuré pour déplacer la deuxième icône d'application cible de la première page vers la seconde page en réponse à l'entrée de glissement, mettre à jour les positions des autres icônes d'application et déplacer une quatrième icône d'application cible sur la seconde page vers la première page, dans lequel
les autres icônes d'application sont des icônes d'application, à l'exception de la deuxième icône d'application cible, dans la première icône d'application cible ; et dans le cas où la première icône d'application cible est l'icône d'application dans la i^{ème} ligne, la quatrième icône d'application cible est une icône d'application dans une i^{ème} ligne de la seconde page ; ou dans le cas où la première icône d'application cible est l'icône d'application dans la j^{ème} colonne, la quatrième icône d'application cible est une icône d'application dans une j^{ème} colonne de la seconde page.

10. Appareil d'affichage (60) d'icône d'application selon la revendication 9, dans lequel le module de mise à jour (62) est spécifiquement configuré pour déplacer la deuxième icône d'application cible vers une deuxième position sur la base d'une direction de glissement de l'entrée de glissement, déplacer séquentiellement chaque icône d'application des autres icônes d'application vers une position suivante dans la direction de glissement, et déplacer la quatrième icône d'application cible vers une troisième position, dans lequel
la deuxième position est l'une quelconque des suivantes : une 1^{ère} position dans la i^{ème} ligne de la seconde page, une dernière position dans la i^{ème} ligne de la seconde page, une 1^{ère} position dans la j^{ème} colonne de la seconde page et une dernière position dans la j^{ème} colonne de la seconde page ; et la troisième position est l'une quelconque des suivantes : une 1^{ère} position dans la i^{ème} ligne de la première page, une dernière position dans la i^{ème} ligne de la première page, une 1^{ère} position dans la j^{ème} colonne de la première page et une dernière position dans la j^{ème} colonne de la première page.

11. Appareil d'affichage (60) d'icône d'application selon la revendication 10, dans lequel la première icône d'application cible est l'icône d'application dans la i^{ème} ligne, la direction de glissement est une première direction ou une deuxième direction, et la deuxième direction est opposée à la première direction ; et
si la direction de glissement est la première direction, la deuxième icône d'application cible est une dernière icône d'application dans la i^{ème} ligne, la deuxième position est la 1^{ère} position dans la i^{ème} ligne de la seconde page, la quatrième icône d'application cible est une dernière icône d'application dans la i^{ème} ligne de la seconde page, et la troisième position est la 1^{ère} position dans la i^{ème} ligne de la première page ; ou si la direction de glissement est la deuxième direction, la deuxième icône d'application cible est une 1^{ère} icône d'application dans la i^{ème} ligne, la deuxième position est la dernière position dans la i^{ème} ligne de la seconde page, la quatrième icône d'application cible est la 1^{ère} icône d'application dans la i^{ème} ligne de la seconde page, et la troisième position est la dernière position dans la i^{ème} ligne de la première page.

12. Appareil d'affichage (60) d'icône d'application selon la revendication 10, dans lequel la première icône d'application cible est l'icône d'application dans la j^{ème} colonne, la direction de glissement est une troisième direction ou une quatrième direction, et la troisième direction est opposée à la quatrième direction ; et
si la direction de glissement est la troisième direction, la deuxième icône d'application cible est une dernière icône d'application dans la j^{ème} colonne, la deuxième position est la 1^{ère} position dans la j^{ème} colonne de la seconde page, la quatrième icône d'application cible est une dernière icône d'application dans la j^{ème} colonne de la seconde page, et la troisième position est la 1^{ère} position dans la j^{ème} colonne de la première page ; ou
si la direction de glissement est la quatrième direction, la deuxième icône d'application cible est une 1^{ère} icône d'application dans la j^{ème} colonne, la deuxième position est la dernière position dans la j^{ème} colonne de la seconde page, la quatrième icône d'application cible est une 1^{ère} icône d'application dans la j^{ème} colonne de la seconde page, et la troisième position est la dernière position dans la j^{ème} colonne de la première page.

13. Appareil d'affichage (60) d'icône d'application selon la revendication 8, dans lequel la deuxième icône d'application cible est une icône d'application qui se trouve sur la première page et qui est associée à la première entrée ; et
le module de mise à jour (62) est spécifiquement configuré pour : si une caractéristique d'entrée de la première entrée correspond à une caractéristique d'entrée prédéfinie, déterminer une icône d'application qui se trouve sur la première page et qui est associée à la caractéristique d'entrée prédéfinie comme deuxième icône d'application cible, déplacer la deuxième icône d'application cible d'une quatrième position sur la première page vers une position prédéfinie sur la première page, et déplacer une icône d'application à la position prédéfinie vers la quatrième position.

14. Appareil d'affichage (60) d'icône d'application selon la revendication 8, dans lequel la deuxième icône d'application cible est une icône d'application qui se trouve sur la première page et qui est associée à la première entrée ; et
le module de mise à jour (62) est spécifiquement configuré pour : si une caractéristique d'entrée de la première entrée correspond à une caractéristique d'entrée prédéfinie, déterminer une icône d'application qui se trouve sur la seconde page et qui est associée à la caractéristique d'entrée prédéfinie comme deuxième icône d'application cible, déplacer la deuxième icône d'application cible d'une cinquième position sur la seconde page vers une position prédéfinie sur la première page, et déplacer une icône d'application à la position prédéfinie vers la cinquième position.
